# EUROPEAN PATENT APPLICATION

(11) **EP 4 339 876 A1**
(43) Date of publication of application: **20.03.2024**
(21) Application number: 22807730.1
(22) Date of filing: 09.05.2022
(51) Int. Cl.: G06T 3/40, G06T 15/00

(54) **GARMENT SIMULATION METHOD AND APPARATUS**

(30) Priority: 12.05.2021 KR 20210061436; 04.05.2022 KR 20220055126
(71) Applicant: CLO Virtual Fashion Inc., Seoul 06236 (KR)
(72) Inventor: OH, Seung Woo, Seoul 06039 (KR)
(74) Representative: Morrall, Jonathan Ian McLachlan
(86) International application number: PCT/KR2022/006528
(87) International publication number: WO 2022/240082

(57) **Abstract**

A method and an apparatus of simulating a garment according to an exemplary embodiment receive an input of changing at least one style line of a plurality of style lines representing at least one of a style and a silhouette of a 3D garment through a user interface expressing the 3D garment, identify at least one first smooth line linked throughout at least one 2D pattern in response to the style line among a plurality of lines included in the 2D patterns corresponding to the 3D garment, transform the first smooth line based on the input, propagate the transformation of the first smooth line to at least one candidate line associated with the first smooth line to transform at least one 2D pattern, and output at least one of the transformed 2D pattern and a 3D garment in which the style line is changed in response to the transformed 2D pattern.

## Description

### Technical Field

Exemplary embodiments relate to a method and an apparatus of simulating a garment.

### Background Art

The garment appears to be three-dimensional when a person wears the garment, but since the garment corresponds to a combination of fabric pieces cut according to a two-dimensional pattern, the garment is close to two dimensions. The fabric that is the material of the garment is flexible, so a form of the fabric can be changed variously, depending on a body shape and movement of the person wearing the garment.

For example, when style lines such as various types of incision lines and/or sewing lines are transformed in order to reflect design elements in the 3D garment, changes should be reflected to lengths and/or areas of the 2D patterns influenced by the transformed lines in the 3D garment.

The background art described above was owned or acquired by the inventor in the process of deriving the disclosure of the application and may not particularly be known art opened to the public before this filing.

### Disclosure of the Invention

### Technical Goals

According to an exemplary embodiment, a style line of a 3D garment expressed in a 3D space can be easily transformed through a user interface.

According to an exemplary embodiment, transformation of the style line input through a 3D interface in the 3D space in which the 3D garment is expressed is propagated to transform lengths and/or areas of 2D patterns constituting the 3D garment.

### Technical Solutions

According to an aspect, there is provided a method of simulating a garment, which may include: an operation of receiving an input of changing at least one style line of a plurality of style lines representing at least one of a style and a silhouette of a 3D garment through a user interface expressing the 3D garment; an operation of identifying at least one first smooth line linked throughout at least one 2D pattern in response to the style line among a plurality of lines included in the 2D patterns corresponding to the 3D garment; an operation of transforming the first smooth line based on the input; an operation of propagating the transformation of the first smooth line to at least one candidate line associated with the first smooth line to transform at least one 2D pattern; and an operation of outputting at least one of the transformed 2D pattern and a 3D garment in which the style line is changed in response to the transformed 2D pattern.

The operation of transforming the 2D pattern may include an operation of generating a smooth line list including the transformed first smooth line and at least one candidate line to which the transformation of the first smooth line is propagated, and an operation of transforming the 2D pattern based on the smooth line list.

The at least one candidate line may include a second smooth line corresponding to the first smooth line in a second pattern symmetric to a first pattern including the first smooth line, a third smooth line started from a non-smooth point of the first smooth line, and at least one third pattern of sewing line connected to at least one of the first smooth line, the second smooth line, and the third smooth line.
the operation of generating the smooth line list may include an operation of generating the smooth line list including the transformed first smooth line, an operation of transforming the at least one candidate line by propagating the transformation of the first smooth line, and an operation of storing information on the transformed candidate line in the smooth line list.

The operation of transforming the at least one candidate line may include an operation of searching the at least one candidate line transformed in association with the transformation of the first smooth line.

The operation of searching the at least one candidate line may include an operation of setting the first smooth line as a current line, an operation of setting a first direction from a start point where the input is received up to an end point opposite to the start point in the current line as a search direction, an operation of searching a next smooth line of the current line based on the current line and the search direction, and an operation of adding the next smooth line to the smooth line list.

The operation of searching the next smooth line of the current line may include an operation of setting at least one of the next line linked with the current line within the 2D pattern including the current line and a line connected to the current line through sewing as the candidate line of the smooth line based on the current line and the search direction, an operation of determining smoothness between the corresponding candidate line among the candidate lines of the next smooth line, and the current line, and an operation of searching the corresponding candidate line as the next smooth line based on the smoothness.

The operation of determining the smoothness may include at least one of an operation of determining the smoothness between the corresponding candidate line and the current line based on an angle between the corresponding candidate line and the current line or a curvature of the smooth line connecting the corresponding candidate line and the current line when the corresponding candidate line and the current line are the smoothly linked in the same 2D pattern, and an operation of determining the smoothness between the corresponding candidate line and the current line based on the angle between the corresponding candidate line and the current line connected by the sewing or the curvature of the corresponding candidate line and the current line connected by the sewing when the corresponding candidate line and the current line are the smoothly connected by the sewing.

The operation of searching the next smooth line of the current line may include an operation of searching a first next smooth line of the current line iteratively according to the first direction, and an operation of searching a second next smooth line of the current line iteratively according to a direction opposite to the first direction.
the operation of transforming the at least one 2D pattern includes an operation of adding the transformed first smooth line to the smooth line list, an operation of applying a length change of the transformed first smooth line to the smooth line symmetric to the first smooth line and the smooth line sewn with the first smooth line and adding the corresponding smooth lines to the smooth line list, and in response to a pilar line started from a non-smooth point of each of the smooth lines included in the smooth line list, an S 1 operation of removing a corresponding pilar line from the smooth line list while acquiring the corresponding pilar line, an S2 operation of applying area transformation due to transformation of the corresponding pilar line to a line which is not yet transformed among lines connected to the corresponding pilar line by the sewing and adding the corresponding line to the smooth line list, and an S3 operation of applying the area transformation due to the transformation of the corresponding pilar line to a smooth line having a symmetric relationship with the sewing line, and adding the corresponding smooth line to the smooth line list.

The S 1, S2, and S3 operations may be iteratively performed until there is no remaining pilar line in the smooth line list.

The smooth line list may include at least one of a first smooth line list including at least one first type of smooth line of the smooth line selected by the user, the smooth line symmetric to the selected smooth line, and the smooth line sewn jointly with the selected smooth line, a second smooth line list including a second type of smooth line started from the non-smooth point of the first type of smooth line, a third smooth line list including a third type of smooth line sewn jointly with the second type of smooth line included in the second smooth line list, and a fourth line list including a fourth type of smooth line sewn jointly with the first type of smooth line.

The operation of transforming the 2D pattern based on the smooth line list may include an operation of propagating the transformation of the first smooth line to at least one candidate line associated with the first smooth line based on the smooth line list to change at least one of a length and an area of the 2D pattern.

The operation of changing at least one may include at least one of an operation of propagating the length change of the first type of smooth line included in the first smooth line list to at least one candidate line associated with the first type of smooth line, an operation of propagating the area change due to the transformation of the second type of smooth lines started from the non-smooth point of the first type of smooth lines to at least one candidate line associated with the second type of smooth lines, and an operation of propagating the length change of the third type of smooth line sewn jointly with the second type of smooth line to at least one candidate line associated with the third type of smooth line.

The operation of transforming the 2D pattern may include an operation of transforming some smooth lines corresponding to the input in at least one 2D pattern when the input is generated in the non-smooth point of the first smooth line, and an operation of transforming all smooth lines corresponding to the input in the 2D pattern when the input is generated in the smooth point of the first smooth line.

The operation of transforming some smooth lines corresponding to the input may include an operation of segmenting the first smooth line into segments of the 2D pattern unit based on the non-smooth point of the first smooth line, and an operation of transforming a length of the segment as large as a length corresponding to a changed position of the non-smooth point in a segment including the non-smooth point.

The operation of transforming all smooth lines corresponding to the input may include an operation of transforming all of one or more candidate lines associated with the transformed first smooth line at the same length ratio as the transformed first smooth line.

The operation of transforming the 2D pattern may include an operation of calculating first position movement values of first points overlapped with the first smooth line of which length is changed among the second points located on one or more second type of smooth lines started from the non-smooth point of the first smooth line, an operation of calculating second position movement values of the remaining points other than the first points among the second points located on the second type of smooth lines based on the length change ratio of the first smooth line of which length is changed, and an operation of changing an area of the 2D pattern based on the first position movement value and the second position movement value.

The operation of transforming the area of the 2D pattern may include an operation of calculating the length change ratio of the smooth line corresponding to the 2D pattern of which area is changed, and an operation of changing a length ratio of the smooth line sewn jointly with the smooth line corresponding to the 2D pattern of which area is changed based on the length change ratio.

The operation of transforming the 2D pattern may include at least one of an operation of transforming the 2D pattern in a direction which is in contact with the first smooth line when the input is generated the direction which is in contact with the first smooth line, and an operation of transforming the 2D pattern in a direction orthogonal to the first smooth line when the input is generated the direction orthogonal to the first smooth line.

The operation of transforming the 2D pattern in the direction orthogonal to the first smooth line may include an operation of regarding the second type of smooth lines started from the non-smooth point of the first type of smooth lines including at least one of the smooth line selected by the user, the line symmetric to the selected smooth line, and the line sewn jointly with the selected smooth line as the first type of smooth lines to change the length.

The operation of transforming the 2D pattern may include at least one of an operation of transforming both one side where the input is generated and the other side corresponding to one side in the 2D pattern when the input is received through selection of a primary user interface for at least one style line, and an operation of transforming one side where the input is generated in the 2D pattern when the input is received through selection of a secondary user interface which occurs through the selection for at least one style line.

The operation of transforming both transforming both one side where the input is generated and the other side corresponding to one side in the 2D pattern may include an operation of jointly transforming at least one first type of smooth line including at least one of the smooth line at one side selected by the user, the smooth line at the other side symmetric to the selected smooth line, and the smooth line sewn jointly with the smooth line at one side, and a fourth type of smooth line sewn jointly with at least one first type of smooth line.

The operation of transforming one side where the input is generated in the 2D pattern may include an operation of transforming the first type of smooth lines including at least one of the smooth line at one side selected by the user and the smooth line sewn jointly with the smooth line at one side.

According to an exemplary embodiment, there is provided an apparatus of simulating a garment, which may include: a user interface expressing a 3D garment and receiving an input of changing at least one style line of a plurality of style lines representing at least one of a style and a silhouette of the 3D garment; a processor identifying at least one first smooth line throughout at least one 2D pattern in response to the style line among 2D patterns corresponding to the 3D garment, transforming the first smooth line based on the input, and propagating the transformation of the first smooth line to at least one candidate line associated with the first smooth line to transform the at least one 2D pattern; and a display outputting at least one of the transformed 2D patterns and a 3D garment in which the style line is changed in response to the transformed 2D patterns.

### Advantageous Effects

According to an exemplary embodiment, even a user having no professional knowledge of a garment changes a style line of a 3D garment expressed in a 3D space through a user interface to easily receive a simulation result of the 3D garment in which the style line is changed.

According to an exemplary embodiment, transformation of the style line input through a 3D interface in the 3D space in which the 3D garment is expressed is propagated to transform lengths and/or areas of 2D patterns constituting the garment, thereby naturally reflecting the transformation of the style line of the 3D garment to 2D patterns.

### Brief Description of Drawings

FIG. 1 is a diagram for describing an influence of transformation of a 3D garment through a user interface in a 3D space exerts on 2D patterns according to an exemplary embodiment.
FIG. 2 is a flowchart illustrating a method of simulating a garment according to an exemplary embodiment.
FIG. 3 is a diagram for describing a smooth line selected by a user according to an exemplary embodiment.
FIG. 4 is a diagram for describing first type of smooth lines according to an exemplary embodiment.
FIG. 5 is a diagram for describing second type of smooth lines according to an exemplary embodiment.
FIG. 6 is a diagram for describing third type of smooth lines according to an exemplary embodiment.
FIG. 7 is a diagram for describing fourth type of smooth lines according to an exemplary embodiment.
FIG. 8 is a flowchart illustrating a method for generating a smooth line list through searching of a candidate line according to an exemplary embodiment.
FIG. 9 is a diagram for describing a method for generating a smooth line list according to an exemplary embodiment.
FIG. 10 is a diagram for describing a sewn-connected line according to an exemplary embodiment.
FIG. 11 is a flowchart illustrating a method for transforming at least one 2D pattern according to an exemplary embodiment.
FIGS. 12A and 12B are diagrams for describing a transformation direction according to an exemplary embodiment.
FIGS. 13A and 13B are diagrams for describing a method for totally transforming smooth lines and a method for partially transforming smooth lines according to an exemplary embodiment.
FIGS. 14A and 13B are diagrams for describing a method for transforming lengths of all smooth lines corresponding to an input and a method for transforming lengths of some smooth lines according to an exemplary embodiment.
FIGS. 15A and 15B are diagrams for describing a method for changing an entire area corresponding to smooth lines and a method for changing a partial area according to an exemplary embodiment.
FIGS. 16A and 16B are diagrams for describing a method for transforming both sides of a 2D pattern corresponding to smooth lines and a method for transforming one side according to an exemplary embodiment.
FIG. 17 is a block diagram of an apparatus of simulating a garment according to an exemplary embodiment.

### Best Mode for Carrying Out the Invention

Hereinafter, exemplary embodiments will be described in detail with reference to the accompanying drawings. However, various changes may be made to the exemplary embodiments, and thus the scope of the patent application is not limited or limited by these embodiments. It should be understood that all changes, equivalents, or substitutes to the exemplary embodiments are included in the scope of the rights.

The terms used in the exemplary embodiments are used for illustrative purposes only and should not be interpreted as limiting. A singular form includes a plural form if there is no clearly opposite meaning in the context. In the present specification, it should be understood that term "include" or "have" indicates that a feature, a number, an operation, a component, a part or the combination thereof described in the specification is present, but does not exclude a possibility of presence or addition of one or more other features, numbers, operations, components, parts or combinations thereof, in advance.

If not contrarily defined, all terms used herein including technological or scientific terms have the same meanings as those generally understood by those skilled in the art. Terms which are defined in a generally used dictionary should be interpreted to have the same meaning as the meaning in the context of the related art, and are not interpreted as an ideal meaning or excessively formal meanings unless clearly defined in the present application.

In addition, in the description with reference to the accompanying drawings, the same components are assigned the same reference numerals regardless of the reference numerals, and redundant descriptions thereof will be omitted. In describing the exemplary embodiments, a detailed description of related known technologies will be omitted if it is determined that they unnecessarily make the gist of embodiments unclear.

Further, in describing the components of the exemplary embodiment, terms including first, second, A, B, (a), (b), and the like may be used. These terms are just intended to distinguish the components from other components, and the terms do not limit the nature, sequence, or order of the components. When it is disclosed that any component is "connected", "coupled", or "linked" to other components, it should be understood that the component may be directly connected or linked to other components, but another component may be "connected", "coupled", or "linked" between the respective components.

The component included in any one embodiment and a component including a common function will be described by using the same name in another embodiment. Unless there is an opposite description, description of any one embodiment may be applied to another embodiment, and a detailed description will be omitted in a redundant range.

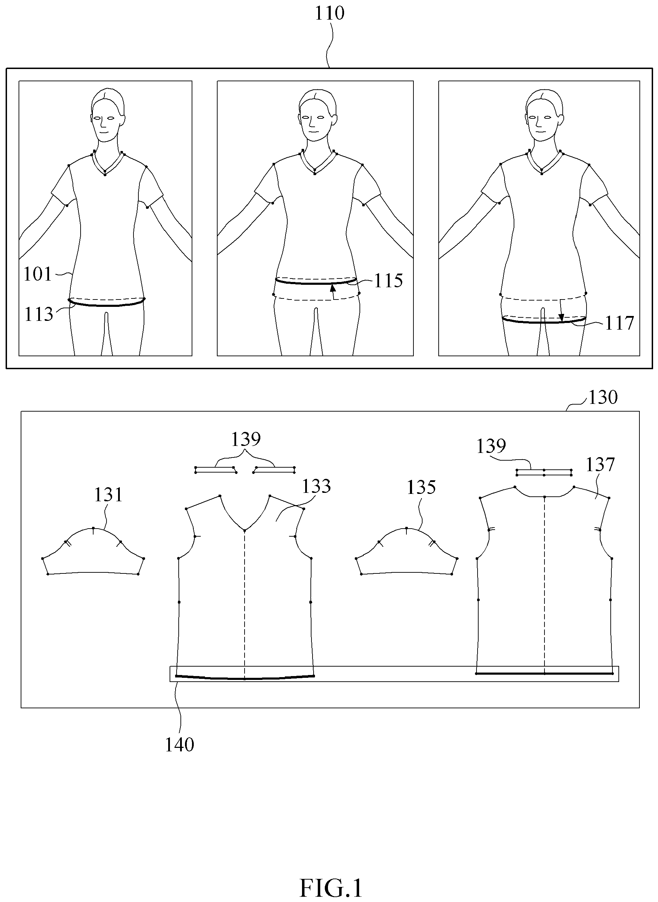

FIG. 1 is a diagram for describing an influence of transformation of a 3D garment through a user interface in a 3D space exerts on 2D patterns according to an exemplary embodiment. Referring to FIG. 1, a diagram 110 illustrating a 3D garment 101 and a diagram 130 illustrating 2D patterns 131, 133, 135, 137, and 139 corresponding to the 3D garment 101 according to an exemplary embodiment are illustrated.

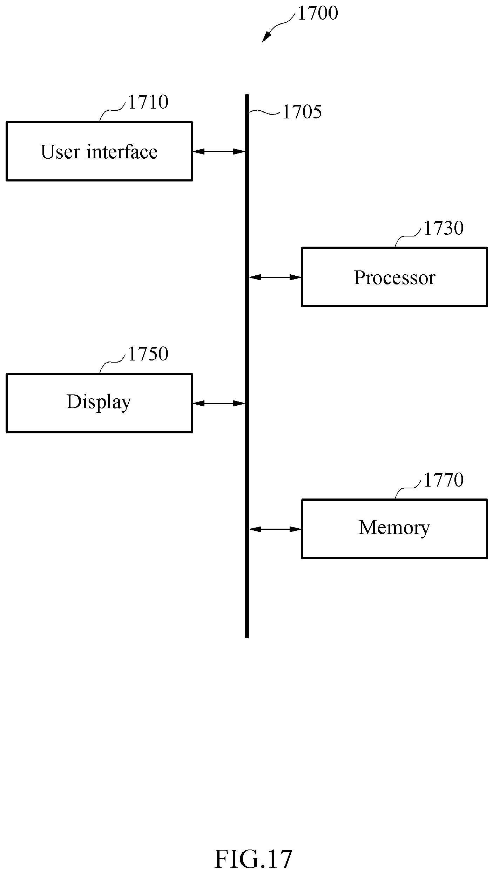

For example, a style line 113 of the 3D garment 101 displayed in a 3D space may be selected through a user interface (e.g., see a user interface 1710 of FIG. 17), and transformed in an upper direction like a style line 115 or in a lower direction like a style line 117. `Style line' as lines shown in appearance in the 3D garment 101 may correspond to, for example, lines representing the style and/or silhouette of the 3D garment 101 such as a sewing line shown in the 3D garment 101 by sewing between the 2D patterns 131, 133, 135, 137, and 139 constituting the 3D garment 101, an outline representing a silhouette of the 3D garment 101, an incision line added for a style of the 3D garment 101, etc.

Hereinafter, it may be appreciated that the `style line' refers to a 3D line shown in the 3D garment 101, and 'smooth line' or 'line' refers to a 2D line linked throughout the 2D patterns 131, 133, 135, 137, and 139 constituting the 3D garment 101. The `smooth line' may be appreciated as lines which are linked smoothly with smoothness throughout a plurality of 2D patterns 131, 133, 135, 137, and 139 such as a line smoothly linking lower ends of front and rear plate patterns of an upper garment, or a line smoothly linking lateral surfaces of a front plate pattern and a rear plate pattern of the upper garment and a line smoothly linking both cross sections of a sleeve pattern. In this case, information on smooth lines linked jointly throughout a plurality of patterns may be stored in a smooth line list (SLL) to be described below.

For example, an input of changing a position of the style line 113 of the 3D garment 101 upward like the style line 115 or changing the position of the style line 113 downward like the style line 117 may be generated. The garment simulating apparatus may transform a position of a bottom smooth line 140 of the 2D patterns 133 and 137 corresponding to the style line 113 among the 2D patterns 131, 133, 135, 137, and 139 upward or downward in response to the changed style lines 115 and 117 as the input of changing the style line 113 of the 3D garment 101 is received.

When receiving a user input of changing the style line 113 shown in the 3D garment 101, the garment simulating apparatus reflects the transformation of the style line 113 to the bottom smooth line 140 of the 2D patterns 133 and 137 corresponding to the style line 113 to express the changed style line 115 or 117 of the 3D garment 101 equally even in the 2D patterns 133 and 137.

When the user transforms the style line 113 of the 3D garment 101 shown to the 3D space through the 3D interface to the style line 115 or the style line 117, the garment simulating apparatus according to an exemplary embodiment propagates the transformation of the style line 115 or the style line 117 to the 2D smooth line 140 corresponding to the style line 113 to transform the lengths and/or areas of the 2D patterns 133 and 137 associated with the smooth line 140, thereby naturally reflecting the transformation which occurs in the 3D garment 101 to the 2D patterns 131, 133, 135, 137, and 139.

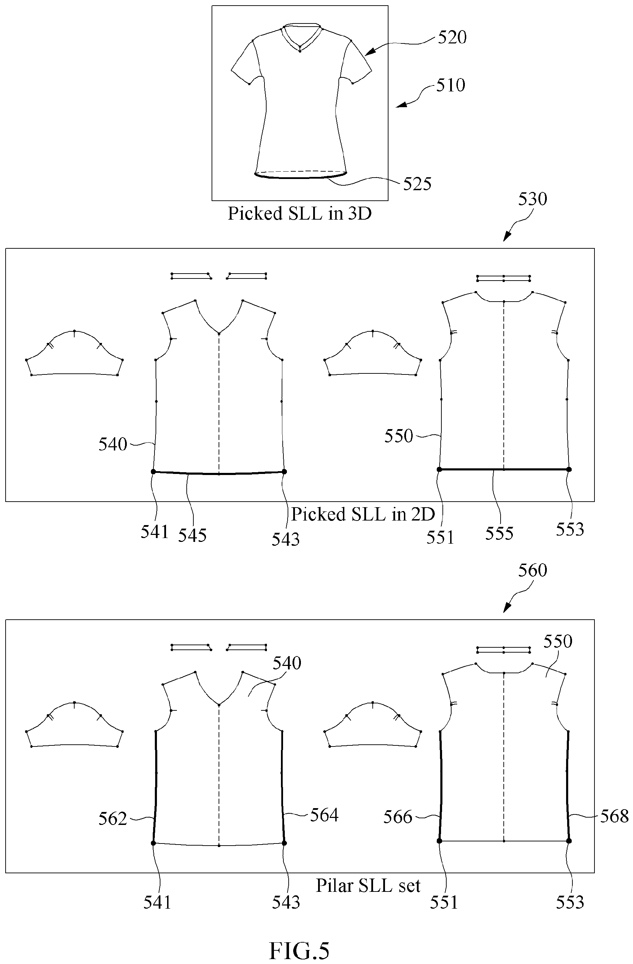

When the user moves the style line 113 and/or any point on the style line 113, the garment simulating apparatus simultaneously transforms smooth lines started from a non-smooth point such as a sewing point on the smooth line 140 and/or smooth lines sewn jointly with the smooth lines started from the non-smooth point in addition to the 2D smooth line 140 corresponding to the style line 113 to naturally reflect the transformation of the style line 113 in the 3D garment 101 to the 2D patterns 131, 133, 135, 137, and 139. The non-smooth point will be described in more detail with reference to FIG. 5 below.

Each of the 2D patterns 131, 133, 135, 137, and 139 illustrated in the diagram 130 may correspond to each body part constituting the 3D garment 101 illustrated in the diagram 110. For example, a right sleeve pattern 131 may correspond to a right arm part of the 3D garment 101 and a front plate body pattern 133 may correspond to a front body part of the 3D garment 101. A left sleeve pattern 135 may correspond to a left arm part of the 3D garment 101 and a rear plate body pattern 137 may correspond to a rear surface body part of the 3D garment 101. A neck collar pattern 139 may correspond to a neck part of the 3D garment 101.

The 2D patterns 131, 133, 135, 137, and 139 may be a virtual 2D pattern modeled to a set of a plurality of polygons in order to simulate the 3D garment 101. The 2D patterns 131, 133, 135, 137, and 139 may include a plurality of pattern pieces, and each of the plurality of pattern pieces may be modeled to a polygonal mesh based on a body shape of a 3D avatar, for example. In this case, the polygonal mesh may include the plurality of polygons (e.g., a triangle or a square).

Although not illustrated in the drawing, the 3D garment 101 and the 2D patterns 131, 133, 135, 137, and 139 may be constituted by the mesh including the plurality of polygons. According to exemplary embodiments, the mesh may be variously modeled. As an example, the vertexes of the polygons included in the mesh are points with mass (point mass), and sides of the polygon may be expressed by springs having elasticity, which connect the mass. As a result, the 3D garment 101 according to an exemplary embodiment may be modeled by a mass-spring model, for example. The springs may have each resist for stretch, shear, and bending according to a property of a used fabric.

Alternatively, the mesh may be modeled to a strain model. The polygon included in the mesh may be modeled to the triangle or also modeled to polygons of the square or more, for example. In some cases, when a 3D volume should be modeled, the mesh may be modeled to a 3D polyhedron.

Vertexes of the polygon(s) included in the mesh may be moved by, for example, external force such as gravity, and internal force such as stretch, shear, and bending. The garment simulating apparatus acquires force applied to each vertex by calculating the external force and the internal force to acquire a displacement speed and a motion of each vertex. The motion of the garment may be simulated through motions of the vertexes of the polygon(s) constituting the mesh in each time operation.

For example, when the 3D garment configured by the polygonal mesh is worn on the 3D avatar, a natural 3D virtual garment based on a physical law may be implemented. The vertexes of the polygon(s) included in the mesh may move according to the action of the external force such as the gravity and the internal force such as stretch, shear, and bending. When the force applied to each vertex is acquired by calculating the external force and the internal force, the displacement and the speed of the motion of each vertex may be acquired. In addition, the motion of the virtual garment may be simulated through the motions of the vertexes of the polygon of the mesh in each time step. When the 2D pattern constituted by the polygonal mesh is worn on the 3D avatar, a 3D virtual garment of a natural shape based on the physical law may be implemented.

The 3D garment 101 according to an exemplary embodiment may include at least one of, for example, a virtual garment suitable for a body size of the user, a virtual garment for a 3D virtual character, and a virtual garment for a 3D virtual avatar.

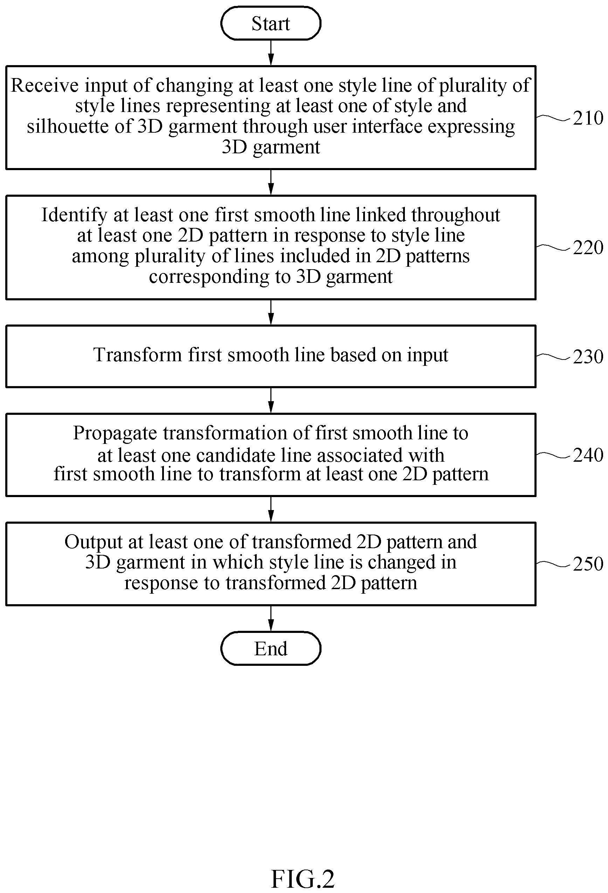

FIG. 2 is a flowchart illustrating a method of simulating a garment according to an exemplary embodiment. Hereinafter, in the exemplary embodiment, respective operations may also be sequentially performed, but are not particularly sequentially performed. For example, an order of the respective operations may also be changed, and at least two operations may also be performed in parallel.

Referring to FIG. 2, the garment simulating apparatus according to an exemplary embodiment may display a 3D garment in which the style line is changed through an operation 210 to an operation 250.

In the operation 210, the garment simulating apparatus may receive an input of changing at least one style line of a plurality of style lines representing at least one of the style and the silhouette of the 3D garment through the user interface expressing the 3D garment. In this case, the input of changing the style line may be generated by selecting one point on the style line through a touch input, a touch pen input, or a mouse click using a finger by the user, and moving a position of the selected point to upper, lower, left, and right positions of the style line, and is not particularly limited thereto.

In the operation 220, the garment simulating apparatus identifies at least one first smooth line linked throughout at least one 2D pattern in response to the style line among a plurality of lines included in the 2D patterns corresponding to the 3D garment. `At least one smooth line linked throughout at least one 2D pattern in response to the style line' may correspond to a line (2D line) of the 2D patterns corresponding to the position of the style line of the 3D garment changed by the user input. In this case, the first smooth line may be singular or may be plural.

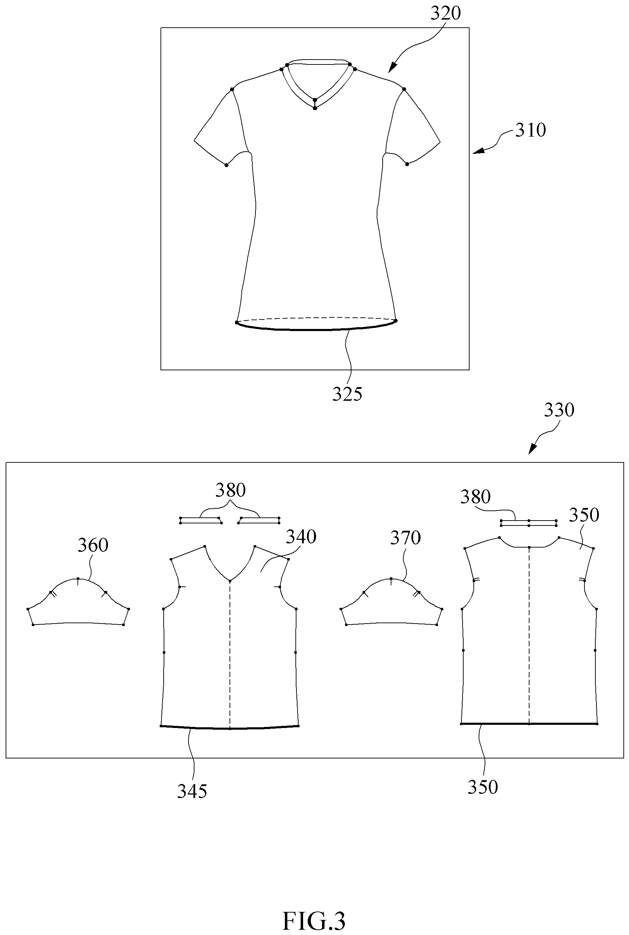

For example, when an input of changing a style line 325 on the bottom of the 3D garment 320 illustrated in an upper diagram 310 of FIG. 3 below is received, the garment simulating apparatus may identify first smooth lines 345 and 355 linked throughout 2D patterns 340 and 350 in response to the style line 325 among a plurality of lines included in 2D patterns 340, 350, 360, 370, and 380 illustrate in a diagram 330. In this case, the 2D patterns 340, 350, 360, 370, and 380 illustrated in the diagram 330 may correspond to the 3D garment 320 illustrated in the diagram 310. The first smooth line 345 may correspond to a bottom line of a front plate pattern 340 of the upper garment corresponding to the bottom style line 325 of the 3D garment 320, and the first smooth line 355 may correspond to the bottom line of a rear plate pattern 350 of the upper garment corresponding to the bottom style line 325 of the 3D garment 320.

In an exemplary embodiment, smooth lines linked throughout the 2D patterns 340, 350, 360, 370, and 380 corresponding to the 3D garment 320 may include, for example, first type of smooth lines corresponding the style line selected by the user, second types of smooth lines started from the non-smooth point of the first type of smooth lines, third type of smooth lines sewn jointly with the second type of smooth lines, and fourth type of smooth lines sewn jointly with the first type of smooth lines, and are not particularly limited thereto. The types of the smooth lines according to an exemplary embodiment will be described in more detail with reference to FIGS. 3 to 7 below.

In the operation 230, the garment simulating apparatus may transform the first smooth line identified in the operation 220 based on the input receive in the operation 210.

In the operation 240, the garment simulating apparatus propagates the transformation of the first smooth line in the operation 230 to at least one candidate line associated with the first smooth line to transform at least one 2D pattern. Here, `at least one candidate line associated with the first smooth line' may include, for example, at least one of a line symmetric to the first smooth line selected by the user and/or a line sewn jointly with the first smooth line selected by the user.

The garment simulating apparatus may also transform at least one 2D pattern so that the shape of the 3D garment is substantially maintained and transform at least one 2D pattern so that the shape of the 3D garment itself is transformed.

At least one candidate line may include at least one of a second smooth line corresponding to the first smooth line in the second pattern symmetric to the first pattern including the first smooth line, a third smooth line started from the non-smooth point of the first smooth line, and at least one sewing line of the third pattern connected to at least one of the first smooth line, the second smooth line and the third smooth line by sewing. The second pattern symmetric to the first pattern may be appreciated, for example, as 2D patterns corresponding to body parts symmetric to each other, such as the left sleeve pattern symmetric to the right sleeve pattern. In the operation 240, the garment simulating apparatus may, for example, generate a smooth line list including the first smooth line transformed in the operation 230 and at least one candidate line in which the transformation of the first smooth line is propagated. `Smooth line list' as an ordered list of lines smoothly connected throughout a plurality of 2D patterns may also be referred to as 'smooth line list (SLL)'.

The SLL may include, for example, a first smooth line list including first type of smooth lines including at least one of the smooth line selected by the user, the line symmetric to the selected smooth line, and the line sewn jointly with the selected smooth line, a second smooth line list including second type of smooth lines started from the non-smooth point of the first type of smooth lines, a third smooth line list including third type of smooth lines sewn jointly with the second type of smooth lines, and a fourth smooth line list including fourth type of smooth lines sewn jointly with the first type of smooth lines, and is not particularly limited thereto.

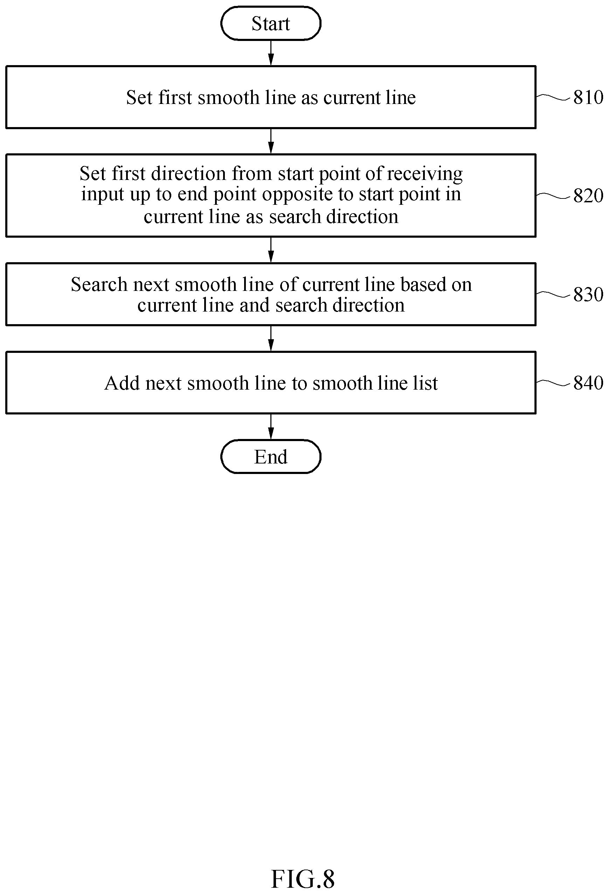

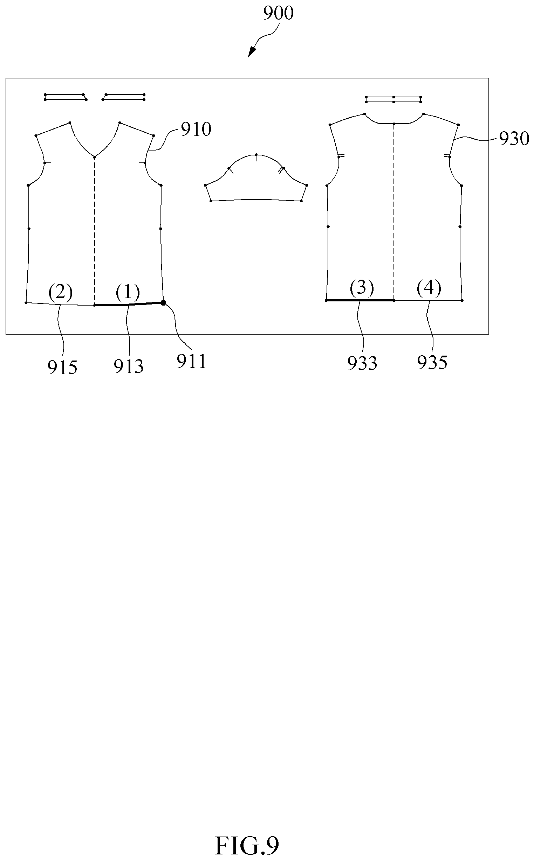

In the operation 240, the garment simulating apparatus propagates the transformation of the first smooth line to transform at least one candidate line. In this case, the garment simulating apparatus may search at least one candidate line transformed in association with the transformation of the first smooth line, and transform at least one searched candidate line. A method in which the garment simulating apparatus searches and transforms at least one candidate line to generate the smooth line list will be described in more detail with reference to FIGS. 8 and 9 below.

In the operation 240, the garment simulating apparatus may store information on the transformed candidate line in the smooth line list. The garment simulating apparatus may transform the 2D pattern based on the SLL.

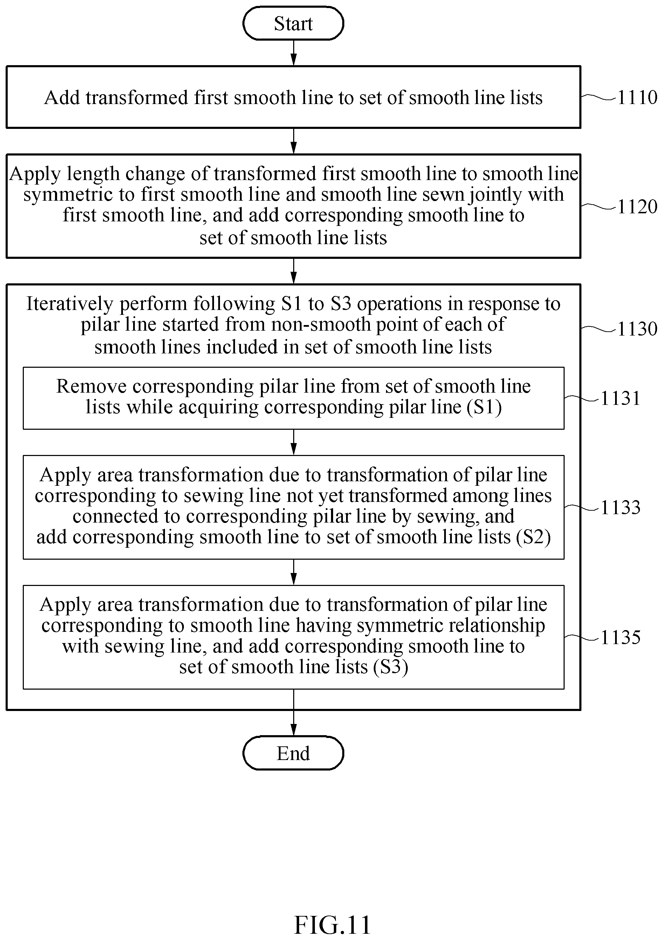

A method in which the garment simulating apparatus transforms at least one 2D pattern will be described in more detail with reference to FIGS. 11 to 16 below.

In the operation 250, the garment simulating apparatus may output at least one of the 2D patterns transformed in the operation 240 and the 3D garment in which the style line is changed in response to the transformed 2D patterns.

FIG. 3 is a diagram for describing a smooth line selected by a user according to an exemplary embodiment. Referring to FIG. 3, a diagram 310 illustrating a 3D garment 320 and a diagram 330 illustrating 2D patterns 340, 350, 360, 370, and 380 corresponding to the 3D garment 320 according to an exemplary embodiment are illustrated.

The garment simulating apparatus may receive, for example, an input of changing the style line 325 of the 3D garment 320 illustrated in the diagram 310. The garment simulating apparatus may identify the first smooth lines 345 and 355 linked throughout the 2D patterns 340 and 350 corresponding to the style line 325 among the smooth lines included in the 2D patterns 340, 350, 360, 370, and 380 corresponding to the 3D garment 320 as illustrated in the diagram 330 in response to the reception of the input of changing the style line. In this case, the first smooth lines 345 and 355 may correspond to the bottom line of the front plate pattern 340 of the upper garment and the bottom line of the rear plate pattern 350 of the upper garment corresponding to the bottom style line 325 of the 3D garment 320.

As such, the user may select any one style line (e.g., style line 325) to be changed in the 3D garment 320, and the smooth lines 345 and 355 on the 2D pattern, which the garment simulating apparatus identifies in response to the style line selected by the user may be referred to as `first type of smooth line'. The first type of smooth lines may also be expressed as 'Picked SLL' in that the first type of smooth lines are the smooth lines corresponding to the style line selected by the user.

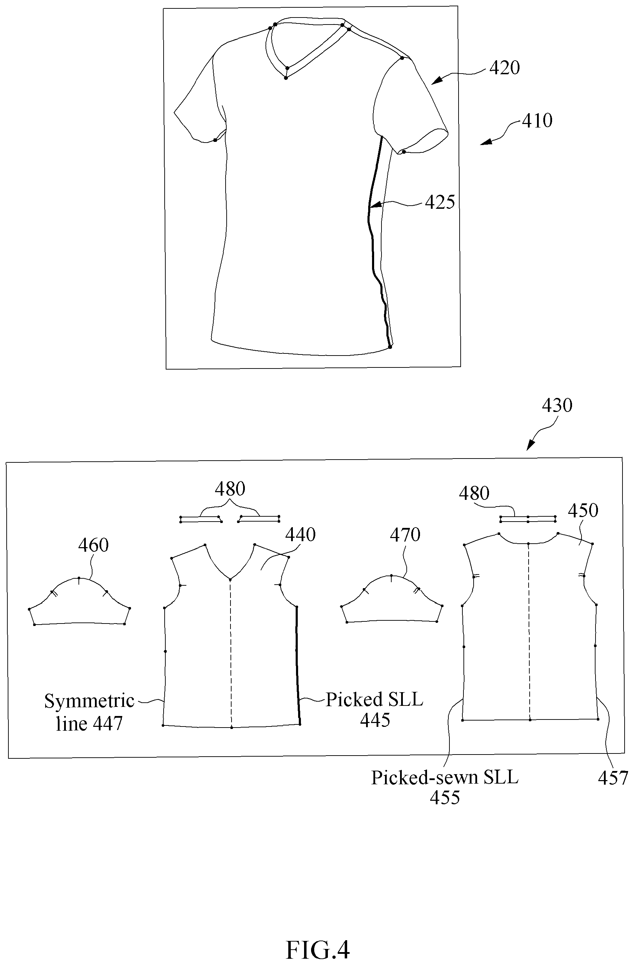

For example, when an input of transforming the style line 325 by moving the position of the style line 325 of the 3D garment 320 upward or downward is received, the garment simulating apparatus transforms the first smooth lines 345 and 355 corresponding to the style line 325, and propagates the corresponding transformation to at least one candidate line associated with the first smooth lines 345 and 355 to transform at least one 2D pattern corresponding to the style line 325. At least one candidate line associated with the first smooth line will be described in more detail with reference to FIG. 4 below.

FIG. 4 is a diagram for describing first type of smooth line according to an exemplary embodiment. Referring to FIG. 4, a diagram 410 illustrating a 3D garment 420 and a diagram 430 illustrating 2D patterns 440, 450, 460, 470, and 480 corresponding to the 3D garment 420 according to an exemplary embodiment are illustrated.

The garment simulating apparatus may receive an input of selection of the user for the style line 425 of the 3D garment 420 illustrated in the diagram 410, for example. In this case, the garment simulating apparatus may identify the first smooth line 445 corresponding to the style line 425 among the 2D patterns 440, 450, 460, 470, and 480 corresponding to the 3D garment 420 as illustrated in the diagram 430.

The garment simulating apparatus may transform the first smooth line 445 by reflecting the change of the style line 425, while propagate the transformation of the first smooth line 445 to at least one candidate line associated with the first smooth line 445. In this case, at least one candidate line associated with the first smooth line 445 may include, for example, a smooth line 447 which is a line symmetric to the first smooth line 445 in the first pattern 440 including the first smooth line 445, a smooth line 455 sewn jointly with the first smooth line 445, and a smooth line 457 sewn jointly with the smooth line 447. Here, the smooth line 457 corresponding to the position of the first smooth line 445 in the second pattern (e.g., 2D pattern 450) symmetric to the first pattern (e.g., second pattern 440) including the first smooth line 445 may be referred to as 'second smooth line'.

As such, the smooth line (Picked SLL) selected by the user and candidate lines associated with the smooth line selected by the user may be referred to as 'first type of smooth line' or 'Picked SLL set'. `First type of smooth line' may be stored in a first smooth line list.

FIG. 5 is a diagram for describing second type of smooth line according to an exemplary embodiment. Referring to FIG. 5, a diagram 510 illustrating a 3D garment 520 according to an exemplary embodiment, a diagram 530 illustrating 2D patterns 540 and 550 including smooth lines 545 and 555 corresponding to a style line 525 selected by the user, and a diagram 560 illustrating second type of smooth lines 562, 564, 566, and 568 started from non-smooth points 541 and 543 of the smooth line 545 and non-smooth lines 551 and 553 of the smooth line 555 are illustrated.

The garment simulating apparatus may receive an input of selection of the user for one point of the style line 525 of the 3D garment 520 illustrated in the diagram 510, for example. In this case, the garment simulating apparatus may identify the first smooth lines 545 and 555 linked throughout the 2D patterns 540 and 550 corresponding to the style line 525 among the 2D patterns corresponding to the 3D garment 520 as illustrated in the diagram 530. In this case, the first smooth lines 545 and 555 may correspond to the `first type of smooth line'.

The garment simulating apparatus may identify the smooth lines (second type of smooth lines) started from the non-smooth points 541, 543, 551, and 553 of each of the first type of smooth lines 545 and 555. Here, `non-smooth point(s) of each of first smooth lines' may be appreciated as a point(s) in which the smoothness of the first smooth lines 545 and 555 is terminated, in which an angle between the first smooth lines 545 and 555, and the corresponding line is equal to or more than the a predetermined angle (e.g., 45 degrees or 90 degrees) or a curvature of a line connecting the first smooth lines 545 and 555, and the corresponding line is equal to or more than a predetermined value (e.g., 60 degrees).

In other words, the non-smooth points 541 and 543 of the first smooth line 545 in the 2D pattern 540 illustrated in the diagram 560 may correspond to both end points of the first smooth line 545, which are points where the smooth lines having a vertical relationship with the first smooth line 545 meet. Further, the non-smooth points 551 and 553 of the first smooth line 555 in the 2D pattern 550 may correspond to both end points of the first smooth line 555, which are points where the smooth lines having the vertical relationship with the first smooth line 555 meet.

The garment simulating apparatus may search the smooth lines 562 and 564 started from the non-smooth points 541 and 543 of the first smooth line 545 of the 2D pattern 540, respectively and the smooth lines 566 and 568 started from the non-smooth points 551 and 553 of the first smooth line 555 of the second pattern 550, respectively as the second type of smooth line, as illustrated in the diagram 560.

As such, the smooth line started from the non-smooth point of the first type of smooth line may be referred to as 'second type of smooth line' or `pilar line'. The garment simulating apparatus may find a pilar line started from the non-smooth point of the smooth line in the 2D pattern.

The second type of smooth lines started from the non-smooth point of the smooth lines included in `first type of smooth line' may be referred to as `pilar SLL set'. The second type of smooth lines may be stored in a second smooth line list.

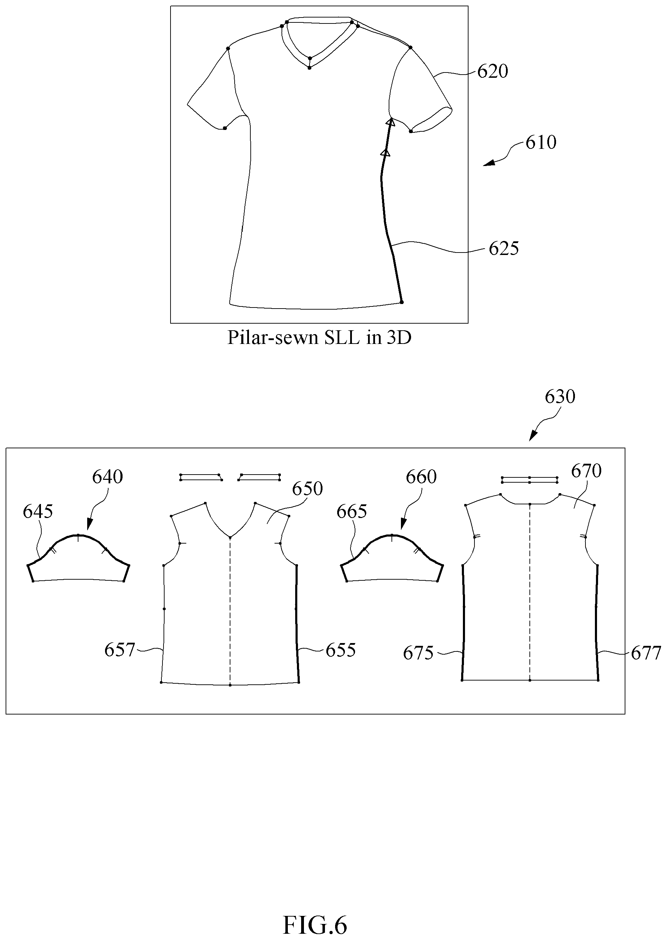

FIG. 6 is a diagram for describing third type of smooth lines according to an exemplary embodiment. Referring to FIG. 6, a diagram 610 illustrating a 3D garment 620 according to an exemplary embodiment, and a diagram 630 illustrating 2D patterns 650 and 670 including smooth lines 655 and 675 corresponding to a style line 625 of the 3D garment 620, and 2D patterns 640 and 650 including the smooth lines 655 and 675 and smooth lines 645 and 665 sewn jointly with smooth lines symmetric to the smooth lines 655 and 675 are illustrated.

For example, when an input of changing a length or a position of the style line 625 of the 3D garment 620 is received, the garment simulating apparatus identifies and transforms the first smooth lines 655 and 675 linked throughout at least one 2D pattern 650 or 670 in response to the style line 625, and propagates the transformation of the first smooth lines 655 and 675 to the smooth lines 657 an 677 symmetric to the first smooth lines 655 and 675 and/or the smooth lines 645 and 665 sewn jointly with the second type of smooth lines 655, 657, 675, and 677 to transform the 2D pattern.

The garment simulating apparatus may propagate the transformation of the first smooth lines 655 and 675 to the smooth lines 645 and 665 of the 2D patterns 640 and 660 connected to the first smooth lines 655 and 675 by sewing. Information on the first smooth lines 655 and 675 and the smooth lines 645 and 665 sewn jointly with the first smooth lines 655 and 675 may be included in the SLL.

For example, when the first smooth lines 655, 657, 675, and 677 correspond to the second type of smooth lines or the pilar lines described above, the smooth lines 645 and 665 sewn jointly with the first smooth lines 655, 657, 675, and 677 may be referred to as 'third type of smooth line'. The third type of smooth lines sewn jointly with the second type of smooth line may be referred to as `pilar sewn SLL set'. The third type of smooth lines may be stored in a third smooth line list.

Although more specifically described below, when the third type of smooth lines 645 and 665 are sewn jointly with the second type of smooth lines, as areas of the 2D patterns 650 and 670 including the second type of smooth lines 655 and 675 are changed, a length ratio of the second type of smooth lines 655 and 675 may also be changed. The garment simulating apparatus may calculate a length change ratio of the smooth lines ('second type of smooth line') 655 and 675 corresponding to the 2D patterns 650 and 670 of which areas are changed, and change a length ratio of the smooth lines 645 and 665 sewn jointly with the smooth line corresponding to the 2D patterns 650 and 670 of which areas are changed based on the length change ratio of the second type of smooth lines 655 and 675.

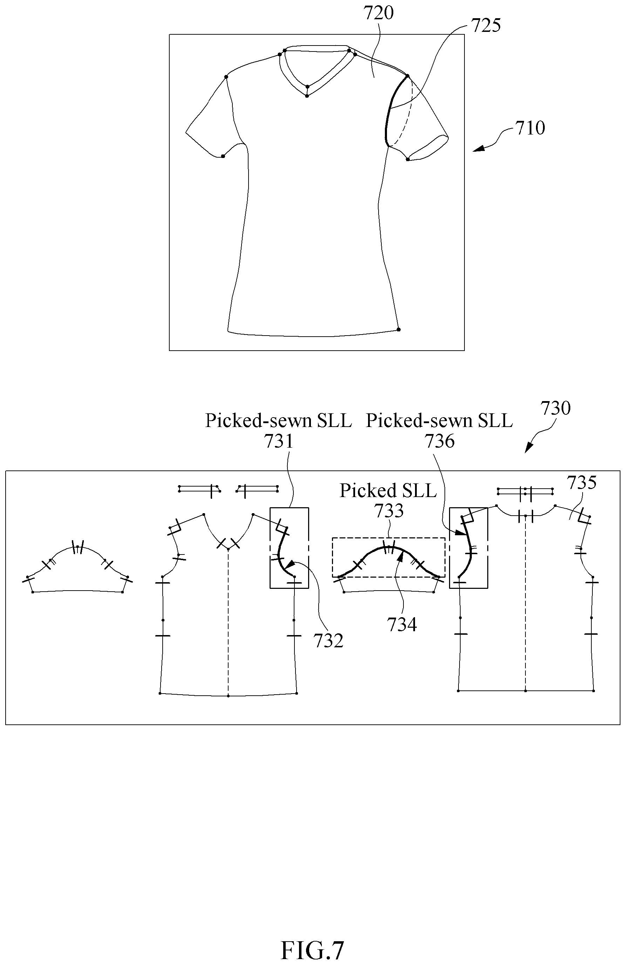

FIG. 7 is a diagram for describing fourth type of smooth line according to an exemplary embodiment. Referring to FIG. 7, a diagram 710 illustrating a 3D garment 720 according to an exemplary embodiment and a diagram 730 illustrating fourth type of smooth lines 732 and 736 sewn jointly with a first type of smooth line 734 corresponding to a style line 725 selected by the user are illustrated.

The garment simulating apparatus may receive, for example, a user input of changing the style line 725 of the 3D garment 720 illustrated in the diagram 710. In this case, the garment simulating apparatus may identify the first smooth line 734 corresponding to the style line 725 among the smooth lines 732, 734, and 736 of 2D patterns 731, 733, and 735 corresponding to the style line 725 of the 3D garment 720 as illustrated in the diagram 730.

When the input of changing the length or position of the style line 725 of the 3D garment 720 is received, the garment simulating apparatus may transform the position and/or the length of the first smooth line 734 according to the transformation of the style line 725, while propagate the transformation of the first smooth line 734 to at least one candidate line associated with the style line 725. In this case, among one or more candidate lines associated with the style line 725, for example, the smooth line 734 of a 2D sleeve pattern 733 corresponding to the style line 725 may correspond to the first type of smooth line, and the smooth line 732 of a front plate pattern 731 sewn jointly with the smooth line 734 and the smooth line 736 of a rear plate pattern 735 may correspond to a fourth type of smooth line sewn jointly with the first type of smooth line. `Fourth type of smooth line' may correspond to the smooth line sewn jointly with the first smooth lines transformed in association with the smooth line selected by the user, and may be referred to as `picked-sewn SLL'. `Picked-sewn SLL' may correspond to a set of smooth lines including all lines sewn with all smooth lines included in picked SLL set.

FIG. 8 is a flowchart illustrating a method for generating a smooth line list through searching of a candidate line according to an exemplary embodiment. Hereinafter, in the exemplary embodiment, respective operations may also be sequentially performed, but are not particularly sequentially performed. For example, an order of the respective operations may be changed, and at least two operations may also be performed in parallel.

Referring to FIG. 8, a process in which the garment simulating apparatus according to an exemplary embodiment generates the SLL through an operation 810 to an operation 840 is illustrated.

In the operation 810, the garment simulating apparatus may set a first smooth line as a current line.

In the operation 820, the garment simulating apparatus may set a first direction from a start point of receiving an input of changing the style line in the current line set in the operation 810 to an end point opposite to the start point as a search direction.

In the operation 830, the garment simulating apparatus may search a next smooth line of the current line based on the current line set in the operation 810 and the search direction set in the operation 820. An example of a method for searching the next smooth line of the current line by the garment simulating apparatus is described below.

The garment simulating apparatus may set at least one of the next line linked with the current line within the 2D pattern including the current line and the line connected to the current line through sewing as the candidate line of the smooth line based on the current line and the search direction. The garment simulating apparatus may determine smoothness between the corresponding candidate line among the candidate lines of the next smooth line, and the current line. A method for determining the smoothness between the candidate line and the current line by the garment simulating apparatus will be described in more detail with reference to FIG. 9 below.

The garment simulating apparatus may search the corresponding candidate line as the next smooth line based on the smoothness. The garment simulating apparatus may select a line which is most smoothly linked with the current line among the candidate lines, i.e., a line having highest smoothness as the next smooth lines, for example.

In the operation 840, the garment simulating apparatus may add the next smooth line searched in the operation 830 to the SLL.

FIG. 9 is a diagram for describing a method for generating a smooth line list according to an exemplary embodiment. Referring to FIG. 9, a diagram 900 for describing a method for generating the SLL by finding smooth lines included in 2D patterns 910 and 930 according to an exemplary embodiment is illustrated.

The smooth line list according to an exemplary embodiment may include the first smooth line transformed by the user and at least one candidate line to which the transformation of the first smooth line is propagated.

For example, it is assumed that the point selected by the user in the 3D garment corresponds to one point 911 on a smooth line 913 on a right bottom of the 2D pattern 910. The garment simulating apparatus receives an input of indicating whether the start point of the smooth line is selected or the end point is selected to output the SLL which is an ordered list of the smooth lines 915, 933, and 935 connected smoothly with the smooth line 913 including one selected point 911.

For example, when one point 911 corresponding to the start point of the smooth line 913 of the 2D pattern 910 is selected, the garment simulating apparatus may mark 'visit' in the smooth line 913, and set the smooth line 913 as the current line.

The garment simulating apparatus may set the first direction (e.g., left direction) from one point 911 which is the start point where the input is received in the current line (e.g., smooth line 913) up to the end point opposite thereto as the search direction. The garment simulating apparatus may search a next smooth line (e.g., smooth line 915) of the current line (smooth line 913) based on the current line and the search direction, and adds the searched next smooth line (smooth line 915) to the SLL.

When there is the searched next smooth line, the garment simulating apparatus may mark 'visit' in the next smooth line, and set the next smooth line as the current line and sequentially add the next smooth line to the SLL. The garment simulating apparatus may repeat an operation of searching the next smooth line of the current line according to the search direction (e.g., left direction).

More specifically, a method for searching the next smooth line of the current line by the garment simulating apparatus is described below.

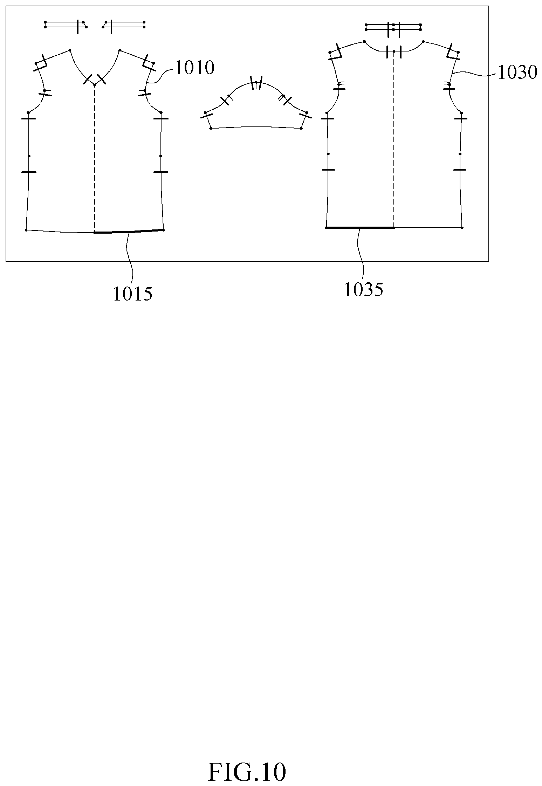

The garment simulating apparatus may set, as the candidate line of the next smooth line, at least one of the next smooth line (smooth line 915) linked with the current line (smooth line 913) and sewn-connected lines (e.g., the smooth line 933 and the smooth line 935) connected to the current line (smooth line 913) through sewing in the 2D pattern 910 including the current line (smooth line 913). Here, `sewn-connected line(s)' will be described in more detail with reference to FIG. 10 below.

The garment simulating apparatus may determine smoothness between the corresponding candidate line among the candidate lines (the smooth line 933 and the smooth line 935) of the next smooth line, and the current line (smooth line 913). For example, when the corresponding candidate line and the current line (smooth line 913) are smoothly linked in the same 2D pattern, the garment simulating apparatus may determine the smoothness between the corresponding candidate line and the current line based on the angle between the corresponding candidate line and the current line or a curvature of the smooth line connecting the corresponding candidate line and the current line.

Alternatively, when the corresponding candidate line (smooth line 933) and the current line (smooth line 913) are the smooth line connected by sewing, the garment simulating apparatus may determine the smoothness between the corresponding candidate line and the current line based on the angle between the corresponding candidate line (smooth line 933) and the current line (smooth line 913) connected by sewing or the curvatures of the corresponding candidate line (smooth line 933) and the current line (smooth line 913) connected by sewing. In this case, `smoothness between corresponding candidate line and current line' may be determined based on at least one of whether the angle between the corresponding candidate line and the current line being equal to or less than a predetermined angle (e.g., 15 degrees) or whether the curvature of the line connecting the corresponding candidate line and the current line being equal to or less than a predetermined value. The garment simulating apparatus may search the corresponding candidate line (smooth line 933) as the next smooth line based on the smoothness. The garment simulating apparatus may search the smooth line (e.g., smooth line 933) having highest smoothness with the current line as the next smooth line among the candidate lines of the next smooth line.

As such, the garment simulating apparatus may search a first next smooth line of the current line (smooth line 913) iteratively according to the first direction (left direction), and then search a second next smooth line of the current line (smooth line 913) iteratively according to the second direction (right direction) opposite to the first direction.

The garment simulating apparatus may search the next smooth line in the opposite direction (right direction) to the search direction of searching the next smooth line (smooth line 915) and add the searched next smooth line to the SLL. As a result, in addition to the smooth line 913 and the smooth line 915 stored in the SLL, the smooth line 933 on the left bottom of the 2D pattern 930 and the smooth line 935 on the right bottom may be sequentially stored in the SLL. The garment simulating apparatus may terminate the operation if there is no next smooth line.

FIG. 10 is a diagram for describing a sewn-connected line connected through sewing according to an exemplary embodiment. Referring to FIG. 10, 2D patterns 1010 and 1030 including lines 1015 and 1035 connected through sewing according to an exemplary embodiment are illustrated.

For example, when one of next lines of line A are sewn with one of next lines of line B, lines A and B may be referred to a 'sewn-connected' relationship.

In FIG. 10, the line 1015 of the pattern 1010 and the line 1035 of the pattern 1030 sewn jointly may correspond to a relationship connected through sewing.

FIG. 11 is a flowchart illustrating a method for transforming at least one 2D pattern by a garment simulating apparatus according to an exemplary embodiment. Hereinafter, in the exemplary embodiment, respective operations may also be sequentially performed, but are not particularly sequentially performed. For example, an order of the respective operations may be changed, and at least two operations may also be performed in parallel.

Referring to FIG. 11, a process in which the garment simulating apparatus according to an exemplary embodiment generates the SLL through an operation 1110 to an operation 1140 is illustrated.

In the operation 1110, the garment simulating apparatus may add a transformed first smooth line to the smooth line list.

In the operation 1120, the garment simulating apparatus may apply the length change of the transformed first smooth line to the smooth line symmetric to the first smooth line and the smooth line sewn with the first smooth line, and add the corresponding smooth lines to the SLL.

In the operation 1130, the garment simulating apparatus may perform the following operations 1131 to 1135 in response to the pilar line started from the non-smooth point of each of the smooth lines included in the SLL.

In the operation 1131, the garment simulating apparatus may remove the corresponding pilar line from the SLL while acquiring the corresponding pilar line. The operation 1131 may be referred to as `S1 operation'.

In the operation 1133, the garment simulating apparatus may apply area transformation due to transformation of the corresponding pilar line to a sewing line which is not yet transformed among the lines connected to the corresponding pilar line by sewing, and add the corresponding sewing line to the SLL. The operation 1133 may be referred to as `S2 operation'.

In the operation 1135, the garment simulating apparatus may apply the area transformation due to the transformation of the corresponding pilar line to the smooth line having a symmetric relationship with the sewing line to a sewing line and add the corresponding smooth line to the SLL. The operation 1135 may be referred to as `S3 operation' .

The garment simulating apparatus may iteratively perform the operations 1131 to 1135 until there is no pilar line which remains in the SLL in the operation 1130.

The garment simulating apparatus may propagate the transformation of the smooth line until a new smooth line is not searched by repeating the operations in the order of Picked SLL -> Pilar SLL -> Pilar-Sewn SLL -> ..., for example.

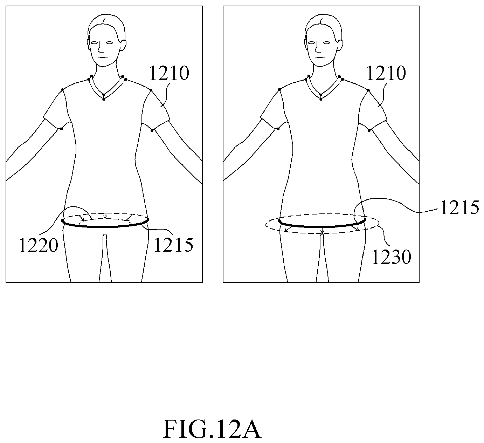

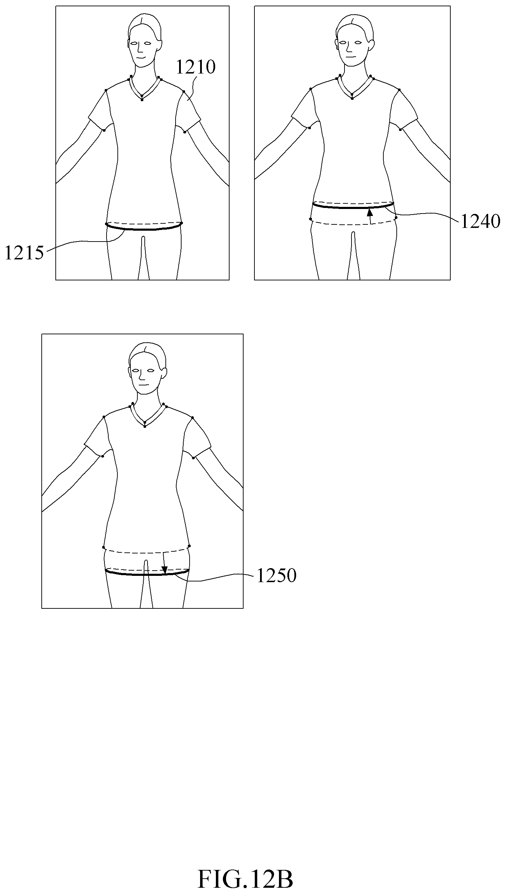

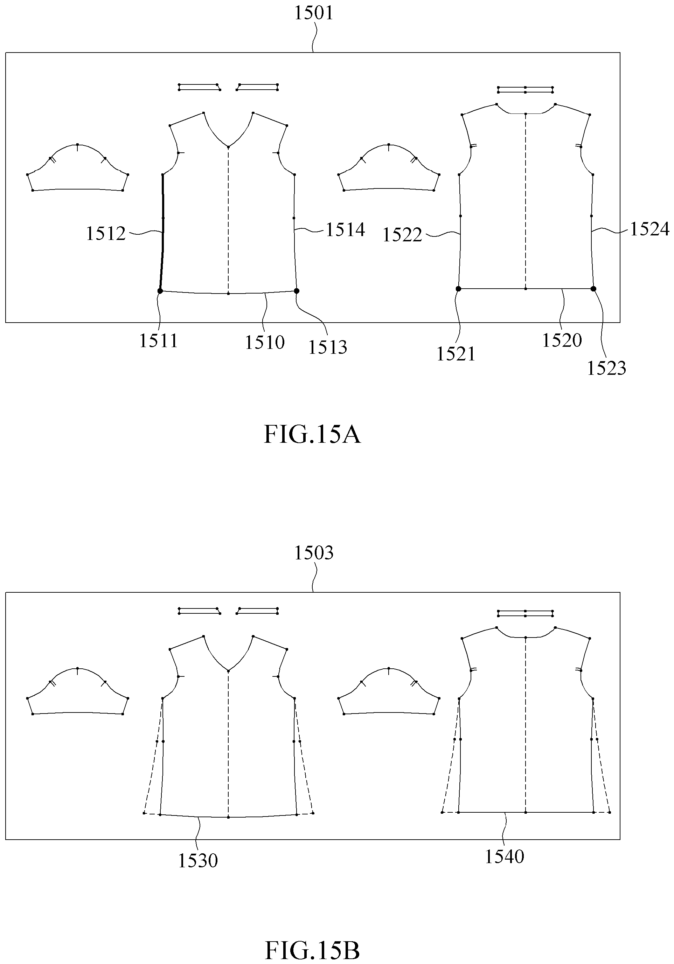

As such, the garment simulating apparatus propagates the transformation of the first smooth line to at least one candidate line associated with the first smooth line based on the SLL to change at least one of the length and the area of the 2D pattern. A method in which the garment simulating apparatus changes at least one of the length and the area of the 2D pattern will be described in more detail with reference to FIGS. 12 and 15 below.

FIGS. 12A and 12B are diagrams for describing a transformation direction according to an exemplary embodiment.

As described above, the garment simulating apparatus propagates the transformation of the smooth line to the candidate lines associated with the smooth line based on the SLL to change at least one of the length and the area of the 2D pattern.

The garment simulating apparatus may propagate the length change for the first type of smooth lines included in the first smooth line list to at least one candidate line associated with the first type of smooth lines. The garment simulating apparatus may propagate the area change due to the transformation of the second type of smooth lines started from the non-smooth point of the first type of smooth lines to at least one candidate line associated with the second type of smooth lines. Alternatively, the garment simulating apparatus may propagate the length change of the third type of smooth lines sewn jointly with the second type of smooth lines to at least one candidate line associated with the third type of smooth lines.

Referring to FIG. 12A, a diagram illustrating a case where the 2D pattern is transformed in a tangent direction of being in contact with the first smooth line is illustrated.

For example, when the input of transforming a style line 1215 of a 3D garment 1210 is generated in a direction of being contact with the smooth line (first smooth line), i.e., an inner direction 1220 or an outer direction 1230 horizontal to the style line 1215, the garment simulating apparatus may transform the 2D pattern corresponding to the input in the tangent direction of being in contact with the first smooth line. Lengths of bottom parts of a front plate 2D pattern and a rear plate 2D pattern corresponding to the style line 1215 may be changed according to the transformation in the tangent direction of being in contact with the first smooth line.

Referring to FIG. 12B, a diagram illustrating a case where the 2D pattern is transformed in a normal direction orthogonal to the first smooth line, i.e., the normal direction is illustrated.

For example, when the input of transforming a style line 1215 of a 3D garment 1210 is generated in a direction orthogonal to the smooth line (first smooth line), i.e., an upper direction 1240 or a lower direction 1250 vertical to the style line 1215, the garment simulating apparatus may transform the 2D pattern corresponding to the input in the normal direction orthogonal to the first smooth line. In this case, the garment simulating apparatus regards the second type of smooth lines started from the non-smooth point of the first type of smooth lines including at least one of the smooth line selected by the user, the line symmetric to the selected smooth line, and the line sewn jointly with the selected smooth line as the first type of smooth lines to change the length. Areas of the front plate 2D pattern and the rear plate 2D pattern corresponding to the style line 1215 may be changed according to the length change in the normal direction orthogonal to the first smooth line.

When the length change in the normal direction occurs, the garment simulating apparatus may regard pilar SLL set as picked SLL set and change the length, for example. In this case, the method for propagating the transformation may be equally applied to the case of transforming the 2D pattern in the tangent direction and the case of transforming the 2D pattern in the normal direction.

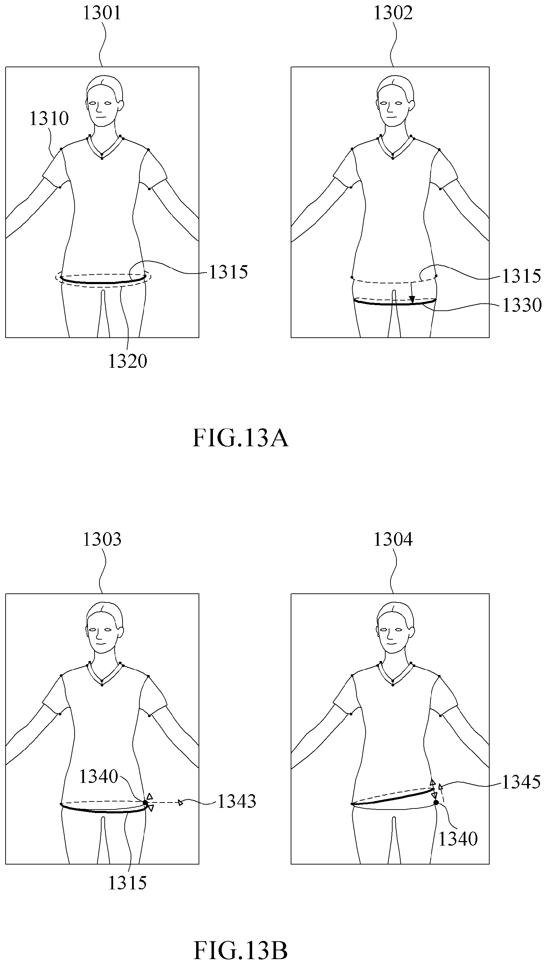

FIGS. 13A and 13B are diagrams for describing a method for totally transforming smooth lines and a method for partially transforming smooth lines according to an exemplary embodiment.

Referring to FIG. 13A, diagrams 1301 and 1302 illustrating an exemplary embodiment in which the smooth lines are totally transformed when any point on a style line 1315 of a 3D garment 1310 is selected according to an exemplary embodiment are illustrated.

For example, it is assumed that a user input of transforming the style line 1315 in a smooth line other than non-smooth points of both ends of the style line 1315 in the 3D garment 1310 illustrated in the diagram 1301 is generated. In this case, when the user selects any point which is not smooth on the style line or the line of the 3D garment 1310, the smooth line corresponding to the point selected in the 2D pattern corresponding to the selected point may be selected.

When the input of transforming the style line 1315 is generated in the smooth point of the first smooth line, the garment simulating apparatus may transform all smooth line(s) corresponding to the input in the 2D patterns corresponding to the 3D garment 1310.

The garment simulating apparatus may transform all smooth line(s) corresponding to the input when horizontal transformation occurs like the line 1320 in the smooth point of the style line 1315 illustrated in the diagram 1301 or vertical transformation occurs like the 1330 in the smooth point of the style line 1315 illustrated in the diagram 1302.

In other words, the user picks any position other than both ends of the style line 1315 of the 3D garment 1310 to totally transform the smooth lines corresponding to the style line 1315 like the line 1320 and/or the line 1330 illustrated in the diagram 1302.

Referring to FIG. 13B, diagrams 1303 and 1304 illustrating an exemplary embodiment in which the smooth lines are partially transformed when a non-smooth point 1340 of the style line 1315 is selected in the 3D garment according to an exemplary embodiment are illustrated.

It is assumed that a user input of changing the style line 1315 in the non-smooth point 1340 such as a sewing point located on the style line 1315 in the 3D garment 1310 illustrated in the diagram 1303 is generated. When the input of transforming the style line 1315 is generated in the non-smooth point 1340, the garment simulating apparatus may transform some smooth lines corresponding to the input in the 2D patterns corresponding to the 3D garment 1310. Here, the case where the input of changing the style line `is generated in the non-smooth point' may be appreciated as a meaning including all cases where the corresponding input is generated in the non-smooth point 1340 and points adjacent to the non-smooth point 1340. `Points adjacent to the non-smooth point' may be appreciated as points located adjacent to the non-smooth point 1340 enough to be recognized as the non-smooth point 1340 when viewed in the 3D garment displayed on a screen with naked eyes.

When transformation in left and right horizontal direction 1343 occurs in the non-smooth point 1340 of the style line 1315 as illustrated in the diagram 1303 or transformation in up and down vertical direction 1345 occurs in the non-smooth point 1340 of the style line 1315 as illustrated in the diagram 1304, the garment simulating apparatus may transform some smooth lines corresponding to the corresponding input in the 2D patterns, i.e., some smooth lines including the non-smooth point 1340.

The user picks the non-smooth point 1340 on the style line 1315 of the 3D garment 1310 to partially transform the smooth lines corresponding to the style line 1315.

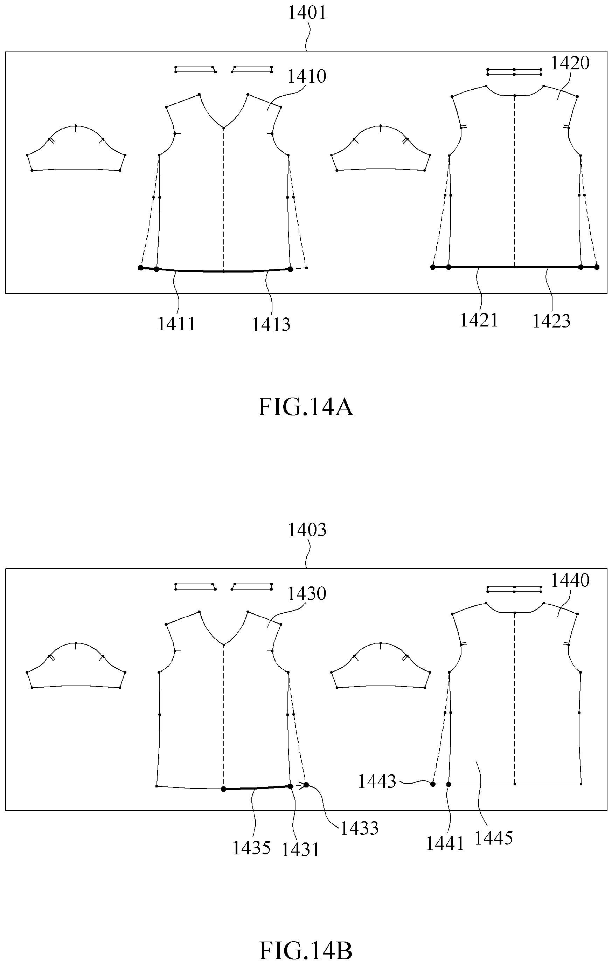

FIGS. 14A and 14B are diagrams for describing a method for transforming lengths of all smooth lines corresponding to an input and a method for transforming lengths of some smooth lines according to an exemplary embodiment.

Referring to FIG. 14A, a diagram 1401 illustrating an exemplary embodiment of transforming lengths of all smooth lines 1411, 1413, 1421, and 1423 of 2D patterns 1410 and 1420 corresponding to the input of changing the style line of the 3D garment according to an exemplary embodiment is illustrated.

For example, when the user input is generated in a point other than the non-smooth point on the smooth line as illustrated in the diagram 1301 or the diagram 1303 of FIG. 13A, the garment simulating apparatus may transform all smooth lines corresponding to the input in the 2D pattern. The garment simulating apparatus may transform all of the smooth lines 1411, 1413, 1421, and 1423 of the 2D patterns 1410 and 1420 corresponding to the input at the same length ratio.

For example, when the length change of the smooth line 1411 occurs in the 2D pattern 1410, the garment simulating apparatus may change all of one or more candidate lines (e.g., the smooth line 1413 which is the next line linked with the smooth line 1411, the smooth line 1423 corresponding to the smooth line 1411 in the 2D pattern 1420 symmetric to the 2D pattern 1410 including the smooth line 1411, and the smooth line 1421 connected to the smooth line 1413 by sewing) associated with the smooth line 1411 of which length is changed at the same length ratio as the transformed smooth line 1411.

Referring to FIG. 14A, a diagram 1403 illustrating an exemplary embodiment of transforming lengths of some smooth lines of the 2D patterns 1430 and 1440 corresponding to the input of changing the style line of the 3D garment according to an exemplary embodiment is illustrated.

For example, when the user input is generated in the non-smooth point such as the sewing point on the smooth line as illustrated in the diagram 1303 or the diagram 1304 of FIG. 13B, the garment simulating apparatus may transform some smooth lines corresponding to the input in the 2D pattern. The garment simulating apparatus may segment the smooth lines corresponding to the user input into 2D pattern unit segments (e.g., segment 1435), and transform some smooth lines by a method for horizontally decreasing or increasing the length of the segment 1435 including the selection point (e.g., non-smooth point 1431) of the user.

The garment simulating apparatus may divide the smooth line into the 2D pattern unit segments based on the non-smooth point of the smooth line, and transform the length of the segment as large as the length corresponding to the changed position of the non-smooth point in the segment including the non-smooth point.

For example, an input of changing the non-smooth point 1431 of the 2D pattern 1430 to a position 1433 by the user may be generated. In this case, the garment simulating apparatus may transform the length of the segment 1435 as large as the length corresponding to the changed position 1433 of the non-smooth point 1431 in the segment 1435 including the non-smooth point 1431.

The garment simulating apparatus may also transform the segment 1445 of the 2D pattern 1440 sewn jointly with the segment 1435 of the 2D pattern 1430 similarly to the segment 1435. The garment simulating apparatus may transform the length of the segment 1445 as large as the length corresponding to the changed position 1443 of the non-smooth point 1441 in the segment 1445 including the non-smooth point 1441. In this case, the transformed length of the segment 1445 may be equal to the transformed length of the segment 1435.

FIGS. 15A and 15B are diagrams for describing a method for changing an area of a 2D pattern corresponding to smooth lines according to an exemplary embodiment.

Referring to FIG. 15A, a diagram 1501 illustrating first type of smooth lines 1510 and 1520 and second type of smooth lines (`pilar lines') 1512, 1514, 1522, and 1524 started from non-smooth points 1511, 1513, 1521, and 1523 of the smooth lines 1510 and 1520 according to an exemplary embodiment is illustrated. Referring to FIG. 15B, a diagram 1503 illustrating smooth lines 1530 and 1540 in which the lengths of the smooth lines 1510 and 1520 illustrated in FIG. 15A and an area of a 2D pattern including the smooth lines 1530 and 1540 being changed according to the length change of the smooth lines 1530 and 1540 is illustrated.

In FIG. 15A, when the length change of the smooth lines 1510 and 1520 occurs by the user input, the positions of the pilar lines 1512, 1514, 1522, and 1524 may be changed by reflecting the length change of the smooth lines 1510 and 1520. When the positions of the pilar lines 1512, 1514, 1522, and 1524 are changed, the area of the 2D pattern including the pilar lines 1512, 1514, 1522, and 1524 may be changed as illustrated in FIG. 15B. In this case, the garment simulating apparatus may calculate position movement values (`first position movement value') of points (`first points') overlapped with a smooth line (`first smooth line') of which length is changed among points ('second points') located on the pilar lines 1512, 1514, 1522, and 1524. In this case, the garment simulating apparatus may interpolate positions of remaining points other than points overlapped with the first type of smooth line of which length is changed based on a length change ratio of the first type of smooth line.

More specifically, the garment simulating apparatus may calculate the first position movement values of the first points overlapped with the first smooth line of which length is changed among the second points located on one or more second type of smooth lines started from the non-smooth point of the first smooth line. The garment simulating apparatus may calculate the second position movement values of the remaining points other than the first points among the second points located on the second type of smooth lines based on the length change ratio of the first smooth line of which length is changed. The garment simulating apparatus may change the area of the 2D pattern based on the first position movement value and the second position movement value.

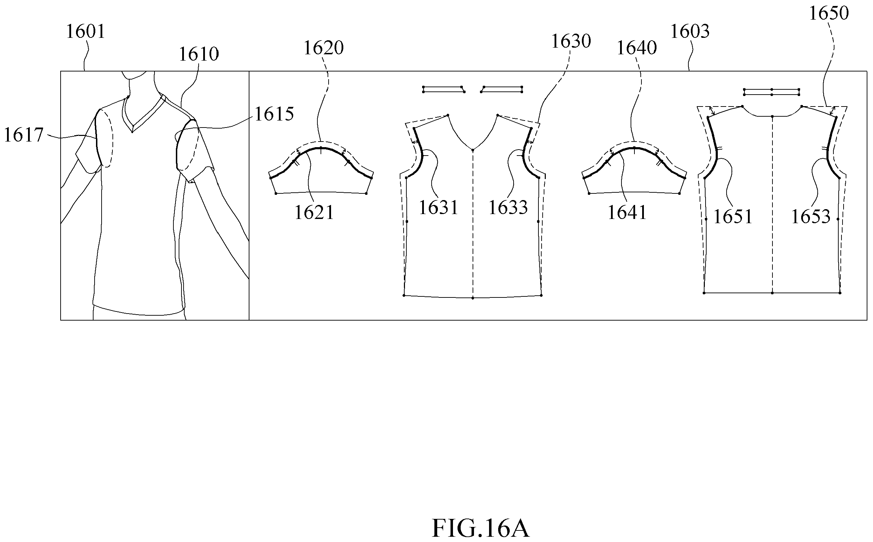

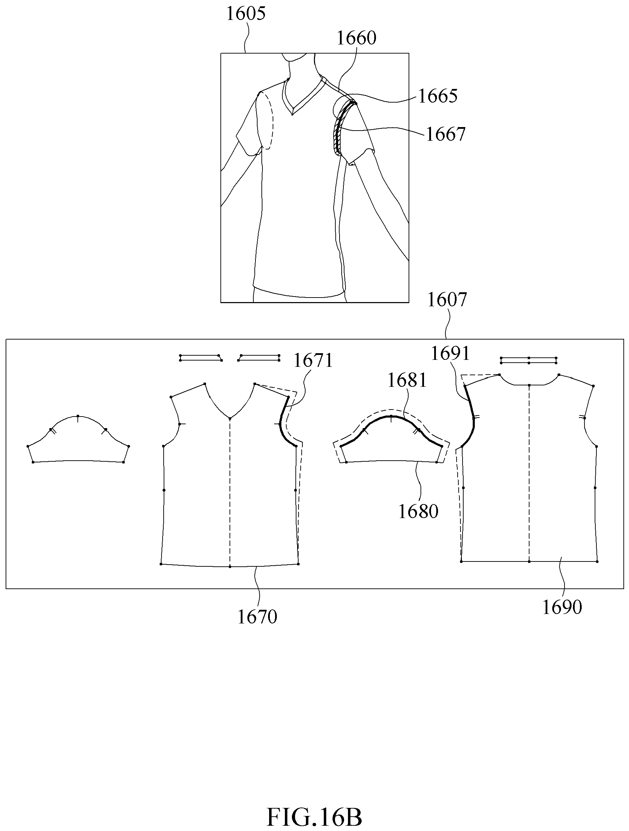

FIGS. 16A and 16B are diagrams for describing a method for transforming both sides of a 2D pattern corresponding to smooth lines and a method for transforming one side according to an exemplary embodiment. Referring to FIG. 16A, a diagram 1601 illustrating a 3D garment 1610 and a diagram 1603 illustrating an exemplary embodiment of transforming both corresponding sleeve patterns 1620 and 1640 among 2D patterns 1620, 1630, 1640, and 1650 corresponding to the 3D garment 1610 according to an exemplary embodiment are illustrated.

For example, when the user clicks a sleeve line 1615 with a mouse and immediately drags the sleeve line 1615 in the 3D garment 1610 illustrated in the diagram 1601, the garment simulating apparatus may also transform the sleeve line 1615 and a sleeve line 1617 corresponding to the sleeve line 1615, i.e., an opposite sleeve line to the sleeve line 1615 jointly. The garment simulating apparatus may propagate transformation of both patterns corresponding to picked SLL set and sewn SLL of picketed SLL.

When an input of transforming the style line 1615 is received through selection of a primary user interface for at least one style line, the garment simulating apparatus may transform one side (e.g., a left sleeve part) where the input is generated in the 2D patterns 1620, 1630, 1640, and 1650 illustrated in the diagram 1603 and the other side (e.g., a right sleeve part) corresponding to the one side jointly. The garment simulating apparatus may transform at least one first type of smooth line including at least one of a smooth line 1641 of the left sleeve part selected by the user, a smooth line 1621 of the right sleeve part symmetric to the selected smooth line 1641, and lines 1633 and 1651 sewn jointly with the selected smooth line 1641, and fourth type of smooth lines 1631 and 1653 sewn jointly with one or more first type of smooth lines 1641, 1621, 1633, and 1651 among the 2D patterns illustrated in the diagram 1603 jointly in response to the input.

Referring to FIG. 16B, a diagram 1605 illustrating a 3D garment 1660 and a diagram 1607 illustrating 2D patterns 1670, 1680, and 1690 corresponding to the 3D garment 1660 according to an exemplary embodiment are illustrated.

For example, the user clicks and selects a sleeve line 1665 with the mouse in the 3D garment 1660 illustrated in the diagram 1605 to select and drag the smooth line 1665 in a secondary user interface 1667. In this case, the garment simulating apparatus may transform the sleeve line 1665 at one side where the input is generated.

When the input is generated through the selection in the secondary user interface 1667 generated through selection of at least one style line (e.g., sleeve line 1665) illustrated in the diagram 1605, the garment simulating apparatus may transform the sleeve line 1665 at one side where the input is generated in the 2D patterns 1670, 1680, and 1690 illustrated in the diagram 1607. When one side is transformed, the garment simulating apparatus may not propagate the transformation of picked SLL set to sewn SLL of picked SLL.

The garment simulating apparatus may transform the first type of smooth lines including the smooth line 1671 selected by the user and the smooth lines 1681 and 1691 sewn jointly with the selected smooth line 1671 in response to the input.

FIG. 17 is a block diagram of an apparatus of simulating a garment according to an exemplary embodiment. Referring to FIG. 17, a garment simulating apparatus 1700 according to an exemplary embodiment may include a user interface 1710, a processor 1730, a display 1750, and a memory 1770. The user interface 1710, the processor 1730, the display 1750, and the memory 1770 may be connected to each other through a communication bus 1705.

The user interface 1710 displays a 3D garment. The user interface 1710 receives an input of changing at least one style line of a plurality of style lines expressing a style of the 3D garment. The user interface 1710 may receive a user input for the 3D garment displayed in the 3D space through a stylus pen or a mouse click, for example.

The processor 1730 identifies the smooth line corresponding to the style line among the smooth lines linked throughout the 2D patterns corresponding to the 3D garment displayed through the user interface 1710. The processor 1730 transforms the smooth line based on the input received through the user interface 1710. The processor 1730 propagates the transformation of the smooth line to candidate lines associated with the smooth line to transform the 2D patterns. The processor 1730 may perform a simulation based on the transformed 2D patterns.

The display 1750 may output at least one of the 2D patterns transformed by the processor 1730 and a 3D garment in which the style line is transformed in response to the 2D patterns transformed by the processor 1730. The display 1750 may display the 3D garment in which the style line is changed in the user interface through the simulation of the processor 1730.

The memory 1770 may store a movement position of the input of changing the style line received through the user interface 1710. The memory 1770 may store the smooth line identified by the processor 1730, the transformed smooth line, and/or the transformed 2D patterns. The memory 1770 may store the transformed 2D patterns in response to the 3D garment in which the style line is changed. Further, the memory 1770 may store a smooth line list generated by the processor 1730.

Besides, the memory 1770 may store various information generated in a processing process of the processor 1730. Besides, the memory 1770 may store various data and programs. The memory 1770 may include a volatile memory or a non-volatile memory. The memory 1770 may include a large-capacity storage medium such as a hard disk, to store various data.

Further, the processor 1730 may perform at least one method or an algorithm corresponding to at least one method described above through FIGS. 1 to 16. The processor 1730 may be a data processing apparatus implemented by hardware having a circuit with a physical structure for executing desired operations. For example, the desired operations may include codes or instructions included in the program. The processor 1730 may be constituted by, for example, a central processing unit (CPU), a graphics processing unit (GPU), or a neural network processing unit (NPU). For example, the garment simulating apparatus 1700 implemented by the hardware may include a microprocessor, a central processing unit, a processor core, a multi-core processor, a multiprocessor, an Application-Specific Integrated Circuit (ASIC), and a Field Programmable Gate Array (FPGA).

The processor 1730 may execute the program and control the garment simulating apparatus 1700. A program code executed by the processor 1730 may be stored in the memory 1770.

The method according to an exemplary embodiment may be implemented in a form of a program command which may be performed through various computer means and recorded in the computer readable medium. The computer readable medium may include a program command, a data file, a data structure, etc., alone or in combination. The program command recorded in the medium may be specially designed and configured for the exemplary embodiment, or may be publicly known to and used by those skilled in the computer software field. An example of the computer readable recording medium includes magnetic media, such as a hard disk, a floppy disk, and a magnetic tape, optical media such as a CD-ROM and a DVD, magneto-optical media such as a floptical disk, and hardware devices such as a ROM, a RAM, and a flash memory, which are specially configured to store and execute the program command. An example of the program command includes a high-level language code executable by a computer by using an interpreter and the like, as well as a machine language code generated by a compiler. The hardware device may be configured to be operated with one or more software modules in order to perform the operation of the exemplary embodiment, and vice versa.

The software may include a computer program, code, instructions, or a combination of one or more thereof, and configure the processing unit to operate as desired, or instruct a processing device independently or collectively. Software and/or data may be interpreted by the processing device or may be permanently or temporarily embodied in any type of machine, component, physical device, virtual equipment, computer storage medium or device in order to provide instructions or data to the processing device. The software may be distributed on a computer system connected through the network and stored or executed by a distributed method. The software and the data may be stored in one or more computer readable recording media.

As described above, although the exemplary embodiments have been described by the limited drawings, those skilled in the art can apply various technical modifications and variations based on the above. For example, the described techniques are performed in a different order from the described method, and/or components such as a system, structure, device, circuit, etc., described are collected or combined in a form different from the described method, or even if the components are replaced or substituted by other components or an equivalent, an appropriate result can be achieved.

Therefore, other implementations, other embodiments and claims and equivalents fall within the scope of the following claims.

### [Explanation of Reference Numerals and Symbols]

1700: Garment simulating apparatus
1705: Communication bus
1710: User interface
1730: Processor
1750: Display
1770: Memory

## Claims

1. A method of simulating a garment, the method comprising:
an operation of receiving an input of changing at least one style line of a plurality of style lines representing at least one of a style and a silhouette of a 3D garment through a user interface expressing the 3D garment;
an operation of identifying at least one first smooth line linked throughout at least one 2D pattern in response to the style line among a plurality of lines included in the 2D patterns corresponding to the 3D garment;
an operation of transforming the first smooth line based on the input;
an operation of propagating the transformation of the first smooth line to at least one candidate line associated with the first smooth line to transform at least one 2D pattern; and
an operation of outputting at least one of the transformed 2D pattern and a 3D garment in which the style line is changed in response to the transformed 2D pattern.

2. The method of simulating a garment of claim 1, wherein the operation of transforming the 2D pattern includes
an operation of generating a smooth line list including the transformed first smooth line and at least one candidate line to which the transformation of the first smooth line is propagated, and
an operation of transforming the 2D pattern based on the smooth line list.

3. The method of simulating a garment of claim 1, wherein at least one candidate line includes
a second smooth line corresponding to the first smooth line in a second pattern symmetric to a first pattern including the first smooth line,
a third smooth line started from a non-smooth point of the first smooth line, and
at least one third pattern of sewing line connected to at least one of the first smooth line, the second smooth line, and the third smooth line.

4. The method of simulating a garment of claim 2, wherein the operation of generating the smooth line list includes
an operation of generating the smooth line list including the transformed first smooth line,
an operation of transforming at least one candidate line by propagating the transformation of the first smooth line, and
an operation of storing information on the transformed candidate line in the smooth line list.

5. The method of simulating a garment of claim 4, wherein the operation of transforming the at least one candidate line includes an operation of searching at least one candidate line transformed in association with the transformation of the first smooth line.

6. The method of simulating a garment of claim 5, wherein the operation of searching the at least one candidate line includes
an operation of setting the first smooth line as a current line,
an operation of setting a first direction from a start point where the input is received up to an end point opposite to the start point in the current line as a search direction,
an operation of searching a next smooth line of the current line based on the current line and the search direction, and
an operation of adding the next smooth line to the smooth line list.

7. The method of simulating a garment of claim 6, wherein the operation of searching the next smooth line of the current line includes
an operation of setting at least one of the next line linked with the current line within the 2D pattern including the current line and a line connected to the current line through sewing as the candidate line of the smooth line based on the current line and the search direction,
an operation of determining smoothness between the corresponding candidate line among the candidate lines of the next smooth line, and the current line, and
an operation of searching the corresponding candidate line as the next smooth line based on the smoothness.

8. The method of simulating a garment of claim 7, wherein the operation of determining the smoothness includes at least one of
an operation of determining the smoothness between the corresponding candidate line and the current line based on an angle between the corresponding candidate line and the current line or a curvature of the smooth line connecting the corresponding candidate line and the current line when the corresponding candidate line and the current line are the smoothly linked in the same 2D pattern, and
an operation of determining the smoothness between the corresponding candidate line and the current line based on the angle between the corresponding candidate line and the current line connected by the sewing or the curvature of the corresponding candidate line and the current line connected by the sewing when the corresponding candidate line and the current line are the smoothly connected by the sewing.

9. The method of simulating a garment of claim 6, wherein the operation of searching the next smooth line of the current line includes
an operation of searching a first next smooth line of the current line iteratively according to the first direction, and
an operation of searching a second next smooth line of the current line iteratively according to a direction opposite to the first direction.

10. The method of simulating a garment of claim 1, wherein the operation of transforming the at least one 2D pattern includes
an operation of adding the transformed first smooth line to the smooth line list,
an operation of applying a length change of the transformed first smooth line to the smooth line symmetric to the first smooth line and the smooth line sewn with the first smooth line, and adding the corresponding smooth lines to the smooth line list, and
in response to a pilar line started from a non-smooth point of each of the smooth lines included in the smooth line list,
an S 1 operation of removing a corresponding pilar line from the smooth line list while acquiring the corresponding pilar line,
an S2 operation of applying area transformation due to transformation of the corresponding pilar line to a line which is not yet transformed among lines connected to the corresponding pilar line by the sewing and adding the corresponding line to the smooth line list, and
an S3 operation of applying the area transformation due to the transformation of the corresponding pilar line to a smooth line having a symmetric relationship with the sewing line, and adding the corresponding smooth line to the smooth line list.

11. The method of simulating a garment of claim 10, wherein the S1, S2, and S3 operations are iteratively performed until there is no remaining pilar line in the smooth line list.

12. The method of simulating a garment of claim 2, wherein the smooth line list includes at least one of
a first smooth line list including at least one first type of smooth line of the smooth line selected by the user, the smooth line symmetric to the selected smooth line, and the smooth line sewn jointly with the selected smooth line,
a second smooth line list including a second type of smooth line started from the non-smooth point of the first type of smooth line,
a third smooth line list including a third type of smooth line sewn jointly with the second type of smooth line included in the second smooth line list, and
a fourth line list including a fourth type of smooth line sewn jointly with the first type of smooth line.

13. The method of simulating a garment of claim 12, wherein the operation of transforming the 2D pattern based on the smooth line list includes an operation of propagating the transformation of the first smooth line to at least one candidate line associated with the first smooth line based on the smooth line list to change at least one of a length and an area of the 2D pattern.

14. The method of simulating a garment of claim 13, wherein the operation of changing at least one includes at least one of
an operation of propagating the length change of the first type of smooth line included in the first smooth line list to at least one candidate line associated with the first type of smooth line,
an operation of propagating the area change due to the transformation of the second type of smooth lines started from the non-smooth point of the first type of smooth lines to at least one candidate line associated with the second type of smooth lines, and
an operation of propagating the length change of the third type of smooth line sewn jointly with the second type of smooth line to at least one candidate line associated with the third type of smooth line.

15. The method of simulating a garment of claim 1, wherein the operation of transforming the 2D pattern includes
an operation of transforming some smooth lines corresponding to the input in at least one 2D pattern when the input is generated in the non-smooth point of the first smooth line, and
an operation of transforming all smooth lines corresponding to the input in the 2D pattern when the input is generated in the smooth point of the first smooth line.

16. The method of simulating a garment of claim 15, wherein the operation of transforming some smooth lines corresponding to the input includes
an operation of segmenting the first smooth line into segments of the 2D pattern unit based on the non-smooth point of the first smooth line, and
an operation of transforming a length of the segment as large as a length corresponding to a changed position of the non-smooth point in a segment including the non-smooth point.

17. The method of simulating a garment of claim 15, wherein the operation of transforming all smooth lines corresponding to the input includes an operation of transforming all of one or more candidate lines associated with the transformed first smooth line at the same length ratio as the transformed first smooth line.

18. The method of simulating a garment of claim 1, wherein the operation of transforming the 2D pattern includes
an operation of calculating first position movement values of first points overlapped with the first smooth line of which length is changed among the second points located on one or more second type of smooth lines started from the non-smooth point of the first smooth line,
an operation of calculating second position movement values of the remaining points other than the first points among the second points located on the second type of smooth lines based on the length change ratio of the first smooth line of which length is changed, and
an operation of changing an area of the 2D pattern based on the first position movement value and the second position movement value.

19. The method of simulating a garment of claim 18, wherein the operation of transforming the area of the 2D pattern includes
an operation of calculating the length change ratio of the smooth line corresponding to the 2D pattern of which area is changed, and
an operation of changing a length ratio of the smooth line sewn jointly with the smooth line corresponding to the 2D pattern of which area is changed based on the length change ratio.

20. The method of simulating a garment of claim 1, wherein the operation of transforming the 2D pattern includes at least one of
an operation of transforming the 2D pattern in a direction which is in contact with the first smooth line when the input is generated the direction which is in contact with the first smooth line, and
an operation of transforming the 2D pattern in a direction orthogonal to the first smooth line when the input is generated the direction orthogonal to the first smooth line.

21. The method of simulating a garment of claim 20, wherein the operation of transforming the 2D pattern in the direction orthogonal to the first smooth line includes
an operation of regarding the second type of smooth lines started from the non-smooth point of the first type of smooth lines including at least one of the smooth line selected by the user, the line symmetric to the selected smooth line, and the line sewn jointly with the selected smooth line as the first type of smooth lines to change the length.

22. The method of simulating a garment of claim 1, wherein the operation of transforming the 2D pattern includes at least one of
an operation of transforming both one side where the input is generated and the other side corresponding to one side in the 2D pattern when the input is received through selection of a primary user interface for at least one style line, and
an operation of transforming one side where the input is generated in the 2D pattern when the input is received through selection of a secondary user interface which occurs through the selection for at least one style line.

23. The method of simulating a garment of claim 22, wherein the operation of transforming both one side where the input is generated and the other side corresponding to one side in the 2D pattern includes an operation of jointly transforming the smooth line at one side selected by the user, the smooth line at the other side symmetric to the selected smooth line, at least one first type of smooth line including at least one of the smooth line sewn jointly with the smooth line at one side, and a fourth type of smooth line sewn jointly with at least one first type of smooth line.

24. The method of simulating a garment of claim 22, wherein the operation of transforming one side where the input is generated in the 2D pattern includes an operation of transforming the first type of smooth lines including at least one of the smooth line at one side selected by the user and the smooth line sewn jointly with the smooth line at one side.

25. A computer program stored in a computer readable storage medium in order to execute the method of claim 1 in combination with hardware.

26. An apparatus of simulating a garment, the apparatus comprising:
a user interface expressing a 3D garment and receiving an input of changing at least one style line of a plurality of style lines representing at least one of a style and a silhouette of the 3D garment;
a processor identifying at least one first smooth line throughout at least one 2D pattern in response to the style line among 2D patterns corresponding to the 3D garment, transforming the first smooth line based on the input, and propagating the transformation of the first smooth line to at least one candidate line associated with the first smooth line to transform the at least one 2D pattern; and
a display outputting at least one of the transformed 2D patterns and a 3D garment in which the style line is changed in response to the transformed 2D patterns.
